# EUROPEAN PATENT APPLICATION

(11) **EP 0 775 999 A1**
(43) Date of publication of application: **28.05.1997**
(21) Application number: 96917674.2
(22) Date of filing: 13.06.1996
(51) Int. Cl.: G11B 7/085, G11B 7/09, G11B 7/095

(54) **DEVICE AND METHOD FOR REPRODUCING INFORMATION**

(30) Priority: 14.06.1995 JP 147175/95; 10.07.1995 JP 173076/95; 04.08.1995 JP 200072/95; 04.06.1996 JP 141375/96
(71) Applicant: NIKON CORPORATION, Tokyo 100 (JP)
(72) Inventor: TANAKA, Toshihisa, Nikon Corporation, Chiyoda-ku, Tokyo 100 (JP); ARAI, Hiroshi, Nikon Corporation, Chiyoda-ku, Tokyo 100 (JP); MATSUZAKI, Takako, Nikon Corporation, Chiyoda-ku, Tokyo 100 (JP); ISHII, Yuwa, Nikon Corporation, Chiyoda-ku, Tokyo 100 (JP)
(74) Representative: Grünecker, Kinkeldey, Stockmair & Schwanhäusser Anwaltssozietät
(86) International application number: JP9601617
(87) International publication number: WO9700517

(57) **Abstract**

Provided is an information reproducing apparatus and information reproducing method that can arbitrarily reproduce information from both tracks in optical/magnetic reproducing apparatus of the land/groove reproducing method.

The information reproducing apparatus for reproducing information from an information recording medium in which a first group of information tracks and a second group of information tracks having the information recorded therein exist in concentric or spiral shape, the first group of tracks and the second group of tracks existing as stepped alternately in the radial direction, comprises:
an optical head for radiating a light beam to an information track of the first group or to an information track of the second group; and
a moving mechanism for moving an irradiation position of the light beam in the radial direction of the information recording medium;
wherein the moving mechanism moves the light beam between tracks of the same first group or between tracks of the different groups.

## Description

### TECHNICAL FIELD

The present invention relates to an information reproducing apparatus and information reproducing method for reproducing information recorded in an information recording medium such as a magneto-optical disk or an optical disk.

### BACKGROUND ART

An example of the conventional information reproducing apparatus is a reproducing apparatus of compact disk (CD).

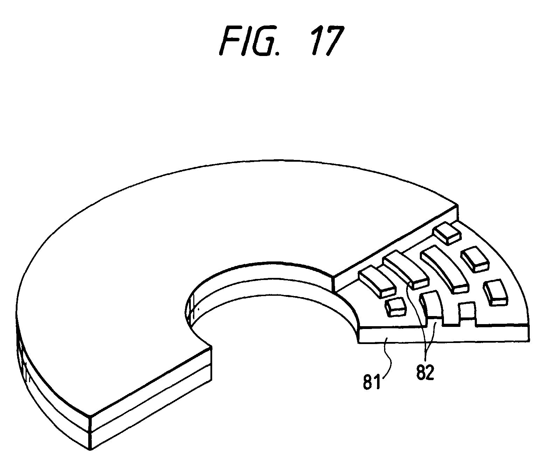

Fig. 17 is a drawing to show the structure of a CD. As shown in Fig. 17, the CD has phase pit string 82 formed in relief and in spiral form on a transparent substrate 81 1.2 mm thick. This is an information track. Then audio information is recorded by corresponding the audio information to lengths of phase pits.

In reproducing the information recorded in the CD, first, the CD is let to rotate. Then, using a light beam emitted from a reproducing head, a light spot with a radius a little greater than the phase pits is formed on the information track. Then, diffraction states of reflected light from the light spot irradiating the information track are detected, thereby reproducing the information.

If there is no phase pit at the position of the light spot, the all reflected light from the information track will return to the reproducing head. Thus, an information detector incorporated in the reproducing head will detect a large value. If there is a phase pit at the position of the light spot, the reflected light from the information track will be diffracted by the phase pit. Because of it, part of the reflected light will be reflected to the outside of the reproducing head so as not to return to the reproducing head. The remaining part of the reflected light will return to the reproducing head. Namely, when a phase pit exists at the position of the light spot, the information detector incorporated in the reproducing head will detect a small value.

In general, the radius of the light beam from the reproducing head can be narrowed down to the diffraction limit. Therefore, with the information reproducing head incorporating a laser light source of the wavelength being 830 nm, the radius of the light spot irradiating the information track can be narrowed down to 1 or less µm. Accordingly, the pitch of information track can be set at 1.6 µm, which permits mass information to be recorded.

Other examples of the information reproducing apparatus include magneto-optical disk apparatus and phase change disk apparatus.

The principle of reproduction of these apparatus is the same as that of the reproducing apparatus of CD except for utilization of the Kerr rotation effect or the reflectance change effect of the reflected light from the medium, and detailed description thereof is thus omitted.

However, a latent demand for recording more information in the information recording medium is extremely high. The inventor has repeatedly conducted many research in order to meet this demand.

Generally, proposed is to shorten the wavelength of the light source of the reproducing head, thereby decreasing the size of reproducing beam more and narrowing the track pitch.

However, because of restrictions on the wavelength of light source of reproducing head, it is impossible to shorten the wavelength without limitation.

On the other hand, if the track were narrowed with the size of the reproducing beam being kept constant, the light spot from the reproducing beam would also come to irradiate an information pit in an adjacent track. This would result in raising the problem that information in the adjacent track is also read out in addition to the information in the object reproducing track.

Thus demanded is an information reproducing apparatus that can restrict reading of information from an adjacent track and reproduce only information from an object track.

After many research has been repeated, the land/groove reproducing method was discovered as a means for restricting such reading of information from an adjacent track. Tracks in the recording media such as magneto-optical disks are normally comprised of concentric or spiral grooves. Accordingly, there are protruded portions and recessed portions in a recording surface. In the conventional recording media, information is recorded either in the protruded portions or in the recessed portions. In contrast with it, the land/groove reproducing method uses a disk in which information is recorded both in the protruded portions (lands) and in the recessed portions (grooves).

This method is a very excellent method in that it can decrease the track pitch to approximately a half. The effect to restrict reading of information from an adjacent track by the land/groove reproducing method is explained in the following literature, and the detailed description thereof is thus omitted herein.

The technology concerning the phase change disk is described in "High-density phase change disk by land & groove recording (Abstracts, The fifth symposium of the society for research on phase change recording)". Further, the technology concerning the magneto-optical disk is described in "CROSSTALK ANALYSIS OF LAND/GROOVE MAGNETO-OPTICAL RECORDING (SYMPOSIUM ON OPTICAL MEMORY 1994)".

The restricting effect of information reading from adjacent track in the land/groove reproducing method is also described in Japanese Patent Application No. 6-190695, Japanese Patent Application No. 6-215137, and Japanese Patent Application No. 6-215138 (all of which were filed by the applicant of the present application).

However, since there are two types of information tracks including the land tracks and groove tracks in this land/groove reproduction method, the conventional techniques are incapable of freely reproducing information in an arbitrary track.

For example, in reproducing the information from the recording medium, the light spot is relatively moved on the information tracks, thereby successively reproducing the information recorded on the information tracks. Specifically, in reproduction of CD, the position of irradiation of the light spot is controlled while rotating the disk, whereby the light spot is always kept on an information track. Such control is called as tracking control.

A tracking control mechanism in the conventional apparatus is ready for only tracking of either one track, i.e., a land track or a groove track. It is because characteristics of tracking are different between the land track and the groove track and tracking control suiting characteristics of one track is not suitable for tracking control of the other track.

### DISCLOSURE OF THE INVENTION

The present invention has been accomplished in view of the above problems, and an object of the invention is to provide an information reproducing apparatus and information reproducing method that can perform arbitrary reproduction of information from the both land/groove tracks.

The present invention comprises an information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto an information track of said first group or an information track of said second group; and
a moving mechanism for moving an irradiation position of said light beam in the radial direction of said information recording medium;
wherein said moving mechanism moves said light beam between tracks of the same first group or between tracks of the different groups.

In addition, the present invention comprises an information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto a track of said first group or a track of said second group;
a tracking control circuit for making an irradiation position of said light beam follow a track of said first group or a track of said second group; and
a moving mechanism for moving the irradiation position of said light beam in the radial direction of said information recording medium;
wherein said moving mechanism moves said light beam following a track of said first group to a track of said second group and said tracking control circuit makes said light beam having been moved follow the track of said second group.

In addition, the present invention comprises an information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto an information track of said first group or an information track of said second group;
a moving mechanism for moving an irradiation position of said light beam in the radial direction of said information recording medium;
a tracking control circuit for making the irradiation position of said light beam follow a track of said first group or a track of said second group;
a setting circuit for setting a control condition in said tracking control circuit to a condition of tracking control for said first group of tracks or to a condition of tracking control for said second group of tracks; and
a control circuit for switching setting of the condition of tracking control by said setting circuit to the condition of tracking control for said second group of information tracks when the irradiation position of said light beam moves from an information track of said first group to an information track of said second group.

In addition, the present invention comprises an information reproducing method for reproducing information by radiating a light beam to an information recording medium in which a first group of information tracks and a second group of information tracks having the information recorded therein exist in concentric or spiral shape, said first group of tracks and said second group of tracks existing as stepped alternately in the radial direction, comprising:
upon movement from an information track of said first group to an information track of said second group,
detecting a radial position irradiated by said light beam;
obtaining a difference of relative position between a track position of a destination track and said radial position;
moving said light beam toward the destination track;
switching a condition of tracking control to a condition suitable for the second group of information tracks; and
detecting that said light beam reaches the destination track, and starting the tracking control.

In addition, the present invention comprises a reproducing apparatus for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
a signal generating circuit for generating a track error signal indicating a deviation amount between an irradiation position of said laser light and a track of said first group or a track of said second group;
a tracking control circuit for making the irradiation position of said laser light follow a track of said first group or a track of said second group, based on said track error signal;
a setting circuit for setting a control condition in said tracking control circuit to a condition of tracking control for said first group of tracks or to a condition of tracking control for said second group of tracks;
a moving mechanism for moving the irradiation position of said laser light toward a target track;
a control switching circuit for turning an operation of said tracking control circuit off upon moving the irradiation position of said laser light and turning the operation of said tracking control circuit on when the irradiation position of said laser light comes onto the target track; and
a setting switching circuit for switching said control condition to the condition of tracking control for the other group of tracks before said control switching circuit turns the operation of said tracking control circuit on.

In addition,
setting of the condition of tracking control in said setting circuit may be setting for switching a polarity of said tracking error signal.

In addition, said target track may be a track adjacent to a current irradiation position of said laser light.

In addition,
the apparatus may comprise a signal generating circuit for outputting an acceleration signal for moving the irradiation position of said laser light, and said moving mechanism may start movement of the irradiation position of said laser light, based on the acceleration signal.

In addition,
said signal generating circuit may output a deceleration signal for decreasing a moving speed of the irradiation position of said laser light within a period after the movement of said laser light is started and before said laser light reaches said target track.

In addition,
in said control switching circuit a timing for turning the operation of said tracking control circuit on may be determined based on said track error signal.

In addition, the present invention comprises an information reproducing method for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
generating a track error signal indicating a deviation amount between an irradiation position of said laser light and a track of said first group or a track of said second group;
performing a tracking control for making the irradiation position of said laser light follow a track of said first group or a track of said second group, based on said track error signal;
turning said tracking control off;
moving the irradiation position of said laser light toward a target track;
switching a condition of said tracking control to a tracking control condition for the other group of tracks; and
turning said tracking control on when the irradiation position of said laser light comes onto said target track.

In addition,
switching of the condition of said tracking control may be a control for switching a polarity of said track error signal.

In addition,
said target track may be a track adjacent to a current irradiation position of said laser light.

In addition,
a timing for turning the operation of said tracking control on may be determined based on said track error signal.

In addition, the present invention comprises a reproducing apparatus for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
a tracking control circuit for, based on a track error signal indicating a deviation amount between an irradiation position of said laser light and a track of said first group or a track of said second group, making the irradiation position of said laser light follow the track of said first group or the track of said second group;
a setting circuit for setting a control condition in said tracking control circuit to a condition of tracking control for said first group of tracks or to a condition of tracking control for said second group of tracks;
an offset circuit for adding an offset of a level of a predetermined amount to said tracking control circuit, thereby moving the irradiation position of said light beam toward an adjacent track, and stopping addition of said offset when the irradiation position of said light beam comes onto said adjacent track; and
a setting switching circuit for switching said control condition to the tracking control condition for said adjacent track while the irradiation position of said light beam is moving toward said adjacent track.

In addition,
setting of the condition of tracking control in said setting circuit may be setting for switching a polarity of said track error signal.

In addition,
said setting switching circuit may switch said tracking control condition, based on said track error signal.

In addition,
said offset circuit may stop output of said offset signal, based on said track error signal.

In addition,
the apparatus may be arranged to have an identifying circuit for identifying a group of a track at a current irradiation position of said light beam by detecting address data recorded in each track of said information recording medium; and
a checking circuit for checking whether a destination track is a track adjacent to the track at said current irradiation position;
wherein after completion of said checking, said offset circuit is made to output said offset signal.

In addition, the present invention comprises a reproducing apparatus for reproducing information by radiating a light beam to a disk-shaped information recording medium in which a first group of information tracks and a second group of information tracks having the information recorded therein exist in concentric or spiral shape, said first group of tracks and said second group of tracks existing as stepped alternately in the radial direction and said first group of tracks and said second group of tracks each having address information for retrieval of information recorded therein, comprising:
a determining circuit for taking in address information of a destination track for an irradiation position of said light beam to move and determining whether an address thereof is an address of a track of the first group or an address of a track of the second group;
a tracking control circuit for making the irradiation position of said light beam follow a track of said first group or a track of said second group;
a setting circuit for setting a control condition in said tracking control circuit to a condition of tracking control for said first group of tracks or to a condition of tracking control for said second group of tracks;
a setting circuit for setting said control condition in accordance with a determination result by said determining circuit; and
a moving mechanism for moving the irradiation position of said light beam toward said destination track.

In addition,
setting of the condition of tracking control in said setting circuit may be setting for switching a polarity of a track error signal used upon said tracking control.

In addition,
setting of said control condition by said setting circuit may be carried out before end of movement of said light beam by said moving mechanism.

### BRIEF DESCRIPTION OF THE DRAWINGS

Fig. 1 is a drawing to show the track structure of an information recording medium used in the information reproducing apparatus according to an embodiment of the present invention.

Fig. 2 is a drawing to show the track structure of an information recording medium used in the information reproducing apparatus according to an embodiment of the present invention.

Fig. 3 is a drawing to show the structure of the information reproducing apparatus according to the first embodiment of the present invention.

Fig. 4 is a timing chart to show changes of respective signals in moving a light beam following a land track to a groove track in the first embodiment of the present invention.

Fig. 5 is a timing chart to show changes of respective signals in moving a light beam following a land track to another land track in the first embodiment of the present invention.

Fig. 6 is a flowchart to show a flow of the operation to move the light beam from a certain track to another track in the first embodiment of the present invention.

Fig. 7 is a drawing to show a change of tracking error signal.

Fig. 8 is a drawing to show the structure of the information reproducing apparatus according to the second to the fifth embodiments of the present invention.

Fig. 9 is a drawing to show the structure of servo controller and system controller in the information reproducing apparatus according to the second embodiment of the present invention.

Fig. 10 is a drawing to show a structural example of a land/groove identifying circuit in the information reproducing apparatus according to the second embodiment of the present invention.

Fig. 11 is a drawing for explaining the operation to move the light spot from a land track to a groove track in the information reproducing apparatus according to the second embodiment of the present invention.

Fig. 12 is a drawing for explaining a method for determining from a change of polarity of tracking error signal whether a track irradiated by the light beam is a land track or a groove track, as employed in the information reproducing apparatus according to the second embodiment of the present invention.

Fig. 13 is a drawing to show the structure of servo controller and system controller in the information reproducing apparatus according to the third embodiment of the present invention.

Fig. 14 is a drawing to show the structure of servo controller and system controller in the information reproducing apparatus according to the fourth embodiment of the present invention.

Fig. 15 is a drawing for explaining the operation to move the light spot from a land track to a groove track in the information reproducing apparatus according to the fourth embodiment of the present invention.

Fig. 16 is a drawing to show the structure of servo controller and system controller in the information reproducing apparatus according to the fifth embodiment of the present invention.

Fig. 17 is a drawing to show the structure of the conventional CD (compact disk).

### BEST MODE FOR CARRYING OUT THE INVENTION

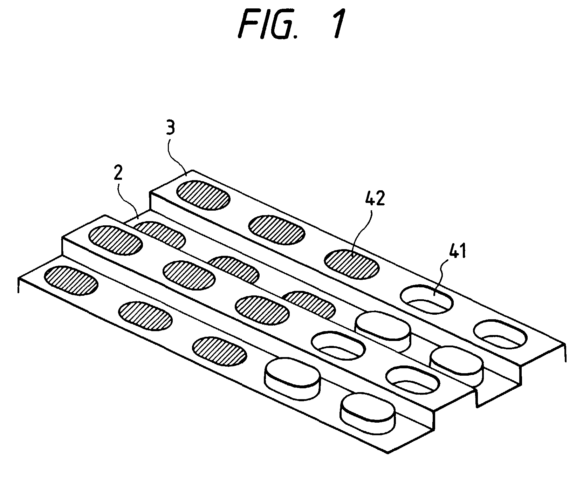

Fig. 1 is a drawing to show the track structure of an information recording medium used in the information reproducing apparatus according to an embodiment of the present invention.

Fig. 1 shows the structure of recording tracks in the disk recording medium. The disk recording medium 1 includes land tracks 2 and groove tracks 3, and a level difference between them is approximately one seventh of λ. Here, λ is the wavelength of the light beam projected onto these tracks, for reproduction.

Each track includes an area in which information is recorded by phase pits 41 and an area in which information is recorded by magneto-optical pits 42. Address information is recorded in the area with information recorded by phase pits 41 while information as recording object (information used by user) is recorded in the area with information recorded by magneto-optical pits 42.

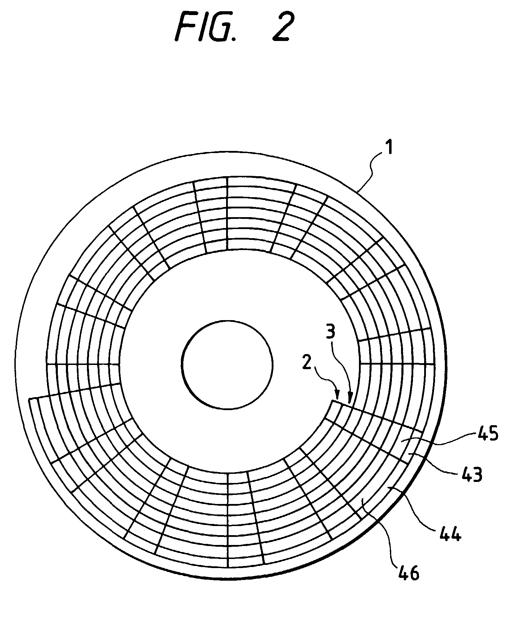

Fig. 2 is a drawing to show a track configuration of an information recording medium used in the information reproducing apparatus according to an embodiment of the present invention.

In the recording surface of the disk recording medium 1, the land tracks 2 and groove tracks 3 are arranged alternately in the radial direction. Each track is formed in a spiral shape. Namely, double spiral tracks of projections and recesses are formed. The land tracks and groove tracks may be formed concentrically and alternately in the radial direction.

In the case of the spiral tracks, either of the land tracks 2 and groove tracks 3 are formed as a continuous track from the innermost to the outermost, but each round of track will be regarded as a track.

As shown in Fig. 2, each track is comprised of address sections 43, 45 and information recording sections 44, 46. A set of consecutive address section and information recording section will be called a sector (for example, a set of address section 43 and information recording section 44). In a track, plural sectors are aligned continuously in the track direction. Address information is recorded by phase pits in the address sections 43, 45. Further, information used by user is recorded by magneto-optical pits in the information recording sections 44, 46.

Track address and sector address are recorded in the address section of each sector. Track addresses are assigned, for example, successively in the ascending order from the innermost track. One track address is recorded in each sector of a track (a round of track).

In the present embodiment, odd track addresses are recorded in the land tracks while even track addresses in the groove tracks.

For example, let us suppose the track address of the innermost track (land track) is "1" and the track address of a track (groove track) one outer than it is "2". Subsequently, the track addresses are assigned toward the outside in the order of "3", "4", "5" ....

Assigning an address to each track in this manner, the odd addresses become land tracks while even addresses groove tracks.

The level difference between the land tracks and the groove tracks is set at a value effective in restricting reading of adjacent track. This value, though somewhat differing depending upon the CD, the magneto-optical disk, the phase change disk, or the like, is approximately one seventh of the wavelength (about one seventh of the wavelength of the light beam projected). Namely, in the case of the wavelength 830 nm of the light beam projected and a transparent substrate of index (refractive index) 1.5 being used, the level difference of 80 nm is preferable.

Properties of information pits are set at values effective in restricting reading of adjacent track. The values differ depending upon the type of disk, for example, depending upon the CD, the magneto-optical disk, the phase change disk, or the like.

For example, the phase difference is preferably a quarter of the wavelength for the CD. Further, the complex Kerr rotation angle is preferably χk = 0° for the magneto-optical disk. Namely, in the case of the magneto-optical disk, information pits can be magnetic pits of the Kerr rotation angle θk = 1° and the complex Kerr rotation angle χk = 0°.

As shown in Fig. 1, the land tracks and groove tracks are formed in the same width in the radial direction of disk in the present embodiment. The track pitch is determined so that when a reproducing beam irradiates a land track at the center, the reproducing beam is prevented from irradiating an adjacent land track.

Under this setting, when the reproducing beam irradiates a groove track at the center, the reproducing beam can be prevented from irradiating an adjacent groove track.

At this time, the reproducing beam irradiating a land track also irradiates adjacent groove tracks, or the reproducing beam irradiating a groove track also irradiates adjacent land tracks, which does not matter.

Namely, in the case of the wavelength of the light beam projected being 830 nm and the numerical aperture of the objective lens of optical head being NA = 0.55, the track pitch from a land track to an adjacent groove track can be set at 800 nm.

The embodiments of the present invention will be described with reference to the drawings.

### (Embodiment 1)

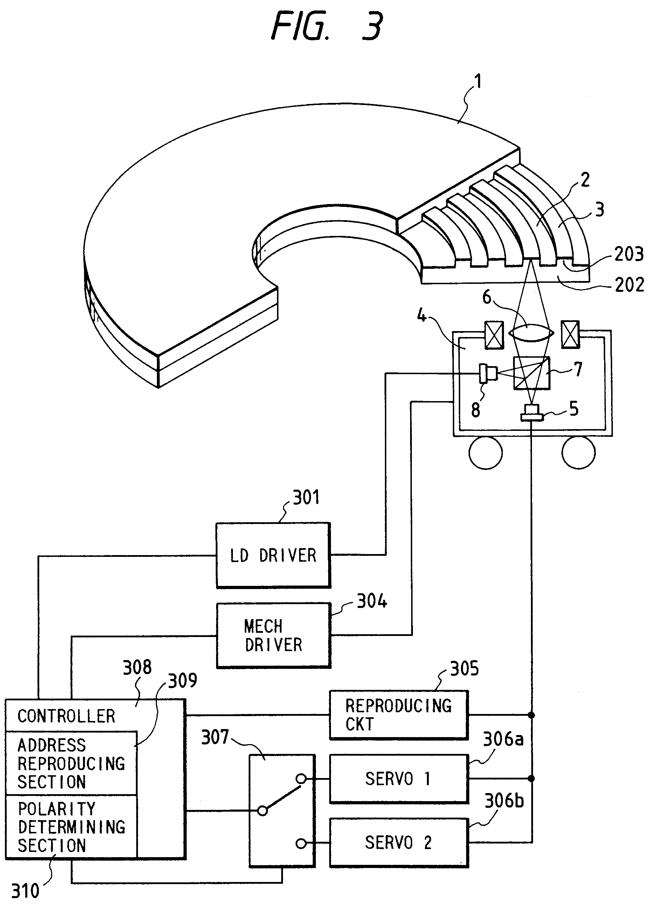

Fig. 3 is a drawing to show the information recording medium and reproducing apparatus thereof according to the first embodiment of the present invention.

The disk recording medium 1 is rotated, for example, at 1800 rpm by a spindle motor not shown.

The disk recording medium 1 includes the land tracks 2 and groove tracks 3, and the level difference between them is about one seventh of λ (where λ is the wavelength of the light beam projected). A reflecting layer of metal (aluminum or the like) is formed on a surface 203 of substrate 201.

Here, tracks formed as protruded portions when seen from the irradiation side of the light beam will be called as land tracks while those formed as recessed portions as groove tracks.

The disk recording medium 1 is a magneto-optical disk. Information is recorded by magnetic pits and phase pits in the land tracks 2 and groove tracks 3. A protective film 202 covering the recording surface having the information recorded therein is made of a polymer material.

The optical head 4 for reproducing the information recorded in the recording medium 1 is constructed as follows. The light beam emitted from a semiconductor laser 8 in the optical head 4 is reflected by a beam splitter 7 and is converged by an objective lens 6 to form a light spot on the track surface of the recording medium 1. The optical head 4 is arranged to be movable in the radial direction of the recording medium 1.

The light reflected by the track surface travels again through the objective lens 6 and through the beam splitter 7 to enter a detector (a photoelectric converter, for example, a photodiode) 5.

The reflected light is converted into electric signals by the detector 5, thus generating a reproduction signal (a phase pit signal or a magneto-optical signal) and servo signals.

The servo signals include a track error signal (a signal indicating an amount of deviation between the light spot formed on a track of the disk recording medium 1 and the center line in the radial direction of track) and a focus error signal (a signal indicating an amount of deviation between the position of a converging point of the light beam and the track surface). The phase pit signal is a reproduction signal of information recorded by phase pits on the track. The magneto-optical signal is a reproduction signal of information recorded by magnetic pits on the track. These reproduction signals are supplied to a reproducing circuit 305 to be processed therein and then to be output as reproduction data to a control unit 308.

The servo signals are supplied to servo circuits 306a and 306b to be subjected to signal processing therein and then to be supplied to a switching circuit 307. The switching circuit 307 outputs either one of the servo signals supplied from the servo circuits 306a and 306b. The servo signal output from the switching circuit 307 is output through the control unit 308 to a mechanical driver 304. The mechanical driver 304 drives a tracking actuator and a focusing actuator in the head 4. In this way, the position of the light spot is positioned at the center of a land track or a groove track and the light spot is focused on the surface of the land track or the groove track.

Next explained are the servo signals.

The servo signals obtained from the land track 2 or the groove track 3 include the focus error signal indicating a relative distance between the medium surface 203 and the objective lens 6 for focusing the light spot and the track error signal indicating the irradiation position (the radial position) of light spot on the medium surface 203.

Here, the track error signal will be described.

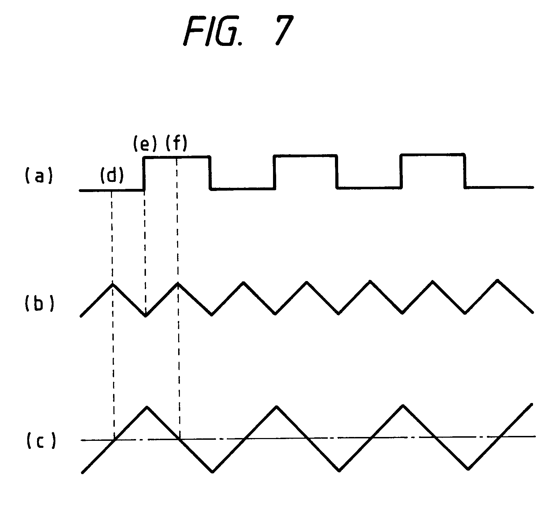

Fig. 7 is a drawing to show a change of the tracking error signal.
(a) in Fig. 7 shows a temporal change of the track error signal detected when the optical head 4 is moved in the radial direction from the inner periphery side to the outer periphery side.
   In (a) in Fig. 7, the portion represented by symbol (d) indicates when the light spot is passing on a land track. The portion represented by symbol (e) indicates when the light spot is passing through a border between a land track and a groove track. The portion represented by symbol (f) indicates when the light spot is passing on a groove track.
(b) in Fig. 7 shows a change of reflectance. The reflectance is a rate of a quantity of light received by the detector 8 to a quantity of light radiated. The reflectance drops when the light spot is passing through the border between the land track and the groove track, as compared with those while the light spot travels on the land track and on the groove track.
(c) in Fig. 7 shows a waveform of the track error signal obtained when the push-pull method is used for detection of track error. While the light spot passes a land track, the slope of change of the track error signal level with a lapse of time is positive. Namely, the level increases monotonously. In contrast, while the light spot passes a groove track, the slope of change of the track error signal level with a lapse of time is negative.
   As seen from Fig. 7, polarities of the track error signal are opposite between while the light spot passes a land track and while it passes a groove track. This means that since the polarities of the track error signal are opposite between while the light spot is on a land track and while it is on a groove track, the tracking control on each track can be performed well by reversing the polarity of the track error signal, depending upon a track currently irradiated by the light spot. Therefore, the present embodiment is arranged so that the same track error signal is supplied to the servo circuits 306a and 306b and the polarities of the signals output therefrom are opposite to each other. The output from the servo circuit 306a is provided with the polarity suitable for the tracking control in the land tracks while the output from the servo circuit 306b with the polarity suitable for the tracking control in the groove tracks.
   The switching circuit 307 selects either one of the signals from the servo circuits 306a and 306b, based on a control signal from the control unit 308, and outputs it to the control unit 308.
   Explained in the following is the operation carried out when the position of irradiation of the light beam is moved from a certain track to another track, in the apparatus of Fig. 3.

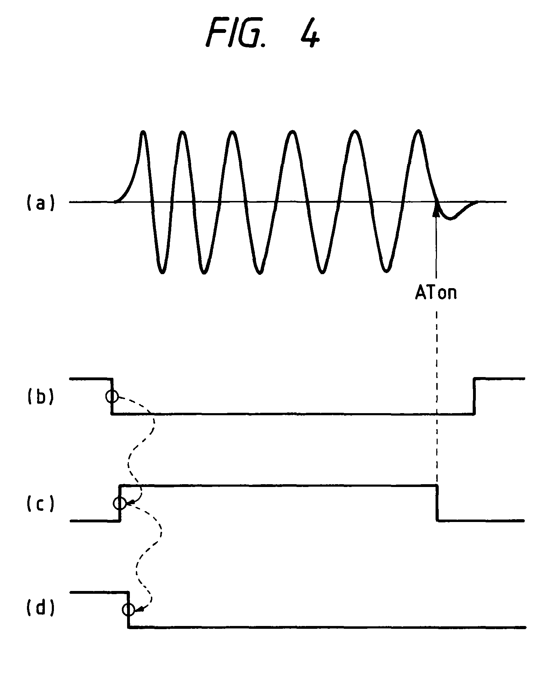

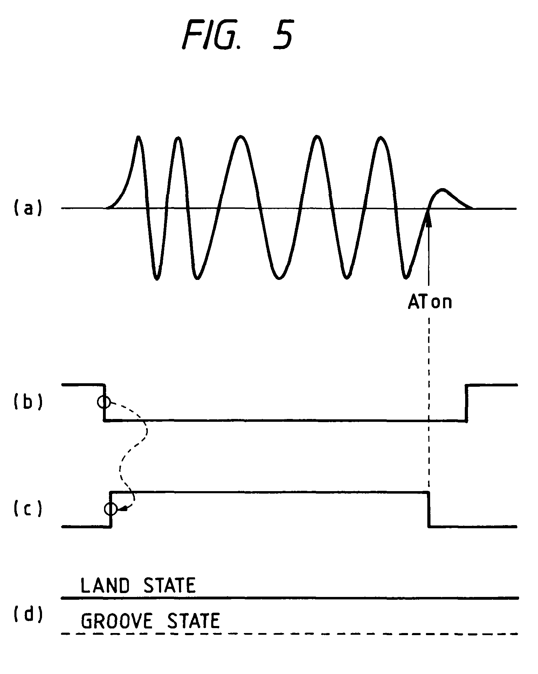

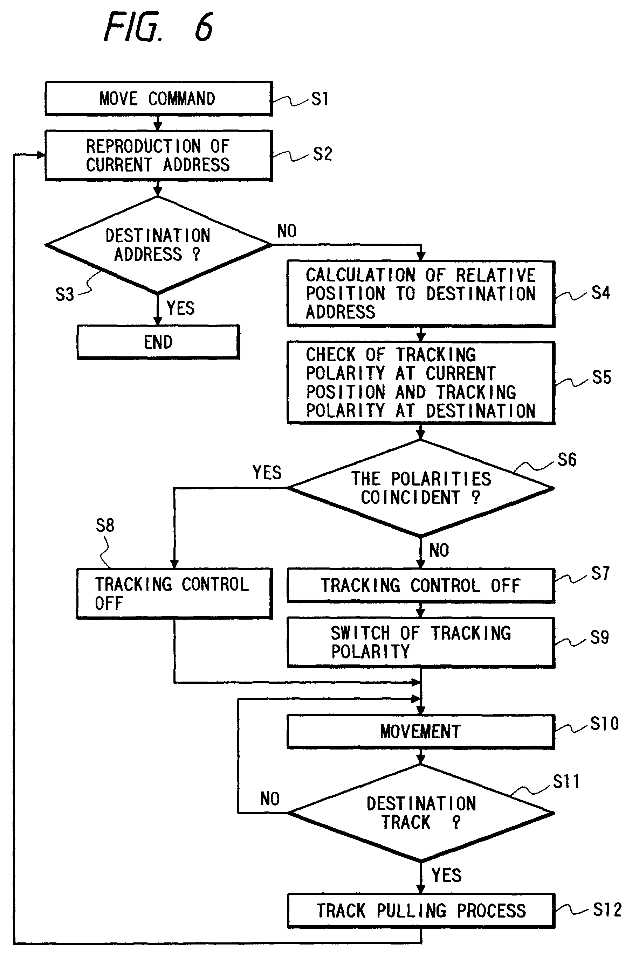

   Fig. 6 is the flowchart to show the flow of the operation to move the light beam from a certain track to another track. Fig. 4 is a timing chart to show changes of respective signals when the light beam following a land track is moved to a groove track. In addition, Fig. 5 is a timing chart to show changes of respective signals when the light beam following a land track is moved to another land track.
   An initial state is assumed to be that the light spot is following a land track. First, a moving command is sent from a host computer or the like to the control unit 308 (step 1 in Fig. 6). (b) in Fig. 4 or (b) in Fig. 5 shows a waveform of the moving command signal. When this signal takes the low level, the control unit 308 starts the control for movement.
   The control unit first reads a track address of the track on which the light spot is currently located (step 2 in Fig. 6). This is extracted from the reproduction data output from the reproducing circuit 305 by an address reproducing section 309 of the control unit 308. A track address of a destination track (hereinafter referred to as a target track) is sent from the host computer. The track address of the present position is compared with the track address of the target track (step 3 in Fig. 6). If they coincide, the track now irradiated by the light spot is the target track. In this case no movement is necessary. If they do not coincide, a difference is obtained between the track address of the current position and the track address of the target track. This gives a difference of relative position between the current position and the moving destination (step 4 in Fig. 6).
   Next, the control unit checks the polarity of the track error signal at the current position and the polarity of the error signal on the target track (step 5 in Fig. 6). This is done by checking whether each of the track at the current position and the target track is a land track or a groove track, which is performed as follows.
   A track address is recorded in each track of the magneto-optical disk 1; for example, the track address of the innermost track (supposed to be a land track) is "1", and the track address of a track one outer than it (a groove track) "2". Subsequently, the track addresses are assigned in the order of "3", "4", "5", ... toward the outside. This results in recording the odd track addresses in the land tracks and the even track addresses in the groove tracks.
   Accordingly, whether the track at the current position is a land track or a groove track can be determined from the track address of the current position. This determination tells to which servo circuit 306a or servo circuit 306b the switching circuit 307 is connected. Of course, instead of checking the tracking address, the control unit may check the condition of the switching circuit 7 (to which it is connected).
   The track address information of the target track is received from the host computer. The track address permits the control unit to determine whether the target track is a land track or a groove track. This determination is carried out by a polarity determining section 310 of the control unit 308.
   Then it is determined whether the tracks at the current position and the target track are tracks of a same kind (i.e., whether the polarities of track error signals generated thereat are the same or not) (step 6 in Fig. 6).
   Here is explained an example where the track at the current position is a land track while the target track is a groove track.
   The control unit 308 turns the tracking control loop off (step 7 in Fig. 6), and executes a control to switch the switching circuit 307, thereby reversing the polarity of the track error signal (step 9 in Fig. 6). Namely, the control unit makes the servo signal from the servo circuit 306b output from the switching circuit 307.
   Then the control unit starts the control to move the head 4 toward the destination track (step 10 in Fig. 6). The off operation of the tracking control is effected when the control unit 308 stops output of signal of tracking servo to the mechanical driver 304. Further, the moving control of the head 4 is effected when the control unit 308 outputs a drive signal of the head 4 to the mechanical driver 304.
   In Fig. 4, with reception of the moving command ((b) in Fig. 4), the aforementioned processing is carried out to turn the tracking control loop off. (c) in Fig. 4 is a signal indicating on/off of the tracking control loop. When this signal turns to the high level, the tracking control loop becomes off.
(d) in Fig. 4 is a signal for reversing the polarity of the track error signal. When this signal is in the high level, the track error signal is of the polarity suitable for the land track (or the signal from the servo circuit 306a is used); when the signal is in the low level, the track error signal is of the polarity suitable for the groove track (or the signal from the servo circuit 306b is used).

Then movement of the head 4 is started. During movement of the head 4, the track error signal, as shown in (a) in Fig. 5, is output from the switching circuit 307. The track error signal is a sinusoidal signal, and a cycle indicates that the light spot has moved from a land track to a next land track. Namely, it means that the light spot has traversed a set of land track and groove track adjacent to each other. Accordingly, the number of tracks having been traversed by the light spot (which is a distance of relative movement) can be obtained by counting the track error signal.

The control unit compares the difference of position between the track at the current position and the target track (the number of tracks to be moved) obtained at step 4 in Fig. 6 with the count value of the track error signal and turns the tracking control loop on when the count value reaches the number of tracks to be moved (step 11 in Fig. 6), thereby effecting pull-in of tracking servo to the track irradiated by the light spot at that time (which is expected to be the target track) (step 12 in Fig. 6). After this pull-in control is started, the light spot becomes to follow the track. Then processing returns to step 2. The control unit reads the track address of the track under pull-in of tracking servo to check whether it is the target track or not, and, if not, repeats the processing.

When the track at the current position and the target track are of a same kind (i.e., when the both are land tracks or when the both are groove tracks), the control unit 308 turns the tracking control loop off (step 8 in Fig. 6), and starts the control to move the head 4 toward the destination track (step 10 in Fig. 6).

In Fig. 5, the moving command signal ((b) in Fig. 5) and the on/off control of the tracking control loop ((c) in Fig. 5) are the same as in Fig. 4. There is no need to change the polarity of the tracking error signal. Accordingly, the signal level of (d) in Fig. 5 is constant.

Steps 11, 12 in Fig. 6 are the same as upon moving to a track of a different kind.

The switching timing of polarity of the track error signal may be determined utilizing a time from the point of turning the tracking control loop off with reception of the moving command or the point when the light spot has moved up to the position of the target track.

The present embodiment is arranged, especially, to switch the polarity of the track error signal (i.e., the polarity of the tracking servo loop), but the apparatus may be modified to switch, upon reception of the moving command, a focus gain, a focus offset, a track offset, or the like as optimized for each of the land track and the groove track.

Also, the above servo circuits 306a, 306b, switching circuit 307, and control unit 308 may be constructed using DSP (Digital Signal Processor).

### (Embodiment 2)

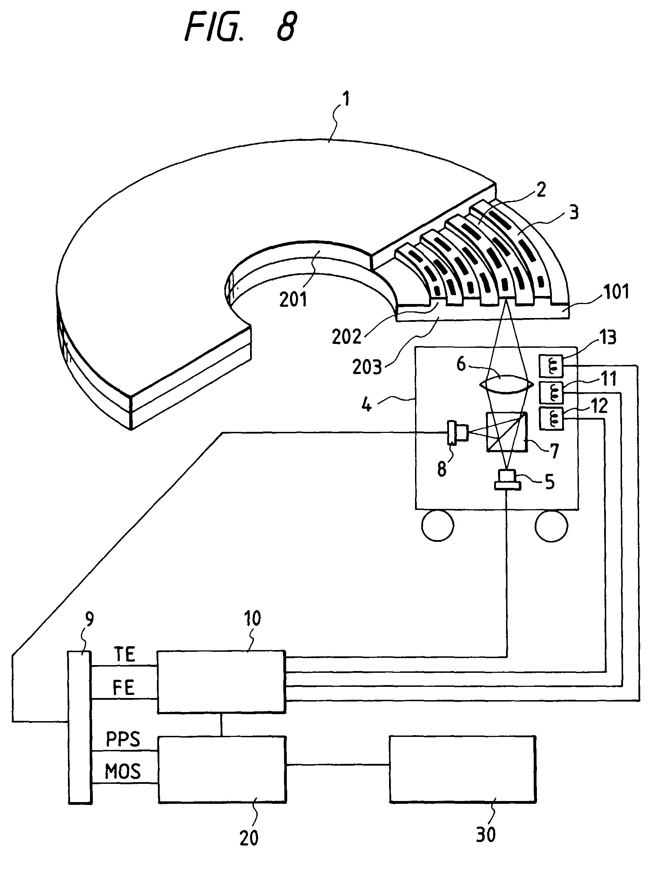

Fig. 8 is a drawing to show the structure of the information reproducing apparatus according to the second embodiment of the present invention. The disk recording medium 1 is rotated, for example, at 1800 rpm by a spindle motor not shown.

The structure of the disk recording medium 1 is the same as the one shown in Fig. 3.

The optical head 4 for reproducing the information recorded in the recording medium 1 is constructed as follows. The light beam emitted from the semiconductor laser 5 in the optical head 4 travels through the beam splitter 7 and is converged by the objective lens 6 to form a light spot on the track surface of the recording medium 1. The light reflected by the track surface travels again through the objective lens 6 and is reflected by the beam splitter 7 to enter the detector (a photoelectric converter, for example, a photodiode) 8.

The reflected light is converted into electric signals by the detector 8 and the electric signals are supplied to an electric circuit 9. The electric circuit 9 processes the electric signals from the detector 8 to output a track error signal (TE), a focus error signal (FE), a phase pit signal (PPS), and a magneto-optical signal (MoS).

The track error signal TE is a signal indicating an amount of deviation between the light spot formed on a track of the disk recording medium 1 and the center line in the radial direction of the track. The focus error signal FE is a signal indicating an amount of deviation between the position of the converging point of the light beam and the track surface. The phase pit signal PPS is a reproduction signal of the information recorded by phase pits on the track. The magneto-optical signal MoS is a reproduction signal of the information recorded by magnetic pits on the track.

The track error signal TE and focus error signal FE are supplied to the servo controller 10 to be subjected to signal processing and to be converted into a tracking signal, a positioning signal, and a focus signal to be output.

The tracking signal is a signal for driving a tracking actuator 11. The tracking signal is a signal in a level according to the level of the track error signal TE (the amount of deviation between the light spot and the center line in the radial direction of the track). The tracking actuator 11 moves the objective lens 6 in the radial direction of the recording medium 1 by an amount according to the level of the tracking signal. This positions the position of the light spot at the center of track.

The positioning signal is a signal for driving a positioner 12. The positioner 12 moves the optical head 4 in the radial direction of the recording medium 1 in accordance with the level of the positioning signal.

The focus signal is a signal for driving a focus actuator 13. The focus signal is a signal in a level according to the level of the focus error signal FE (the amount of deviation between the position of the converging point of the light beam and the track surface). The focus actuator 13 moves the objective lens 6 in the normal direction to the recording surface of the recording medium 1 by an amount according to the level of the focus signal. This focuses the light spot on the track surface.

On the other hand, the phase pit signal PPS and magneto-optical signal MOS are supplied to the system controller 20. These signals are output, as information read out of the recording medium 1, to the host computer 30. Through communication with the host computer 30, the system controller 20 sends the information read out to the host computer 30 in reply to a command from the host computer 30.

Further, the system controller 20 makes a control signal based on the phase pit signal PPS and magneto-optical signal MOS to send it to the servo controller 10.

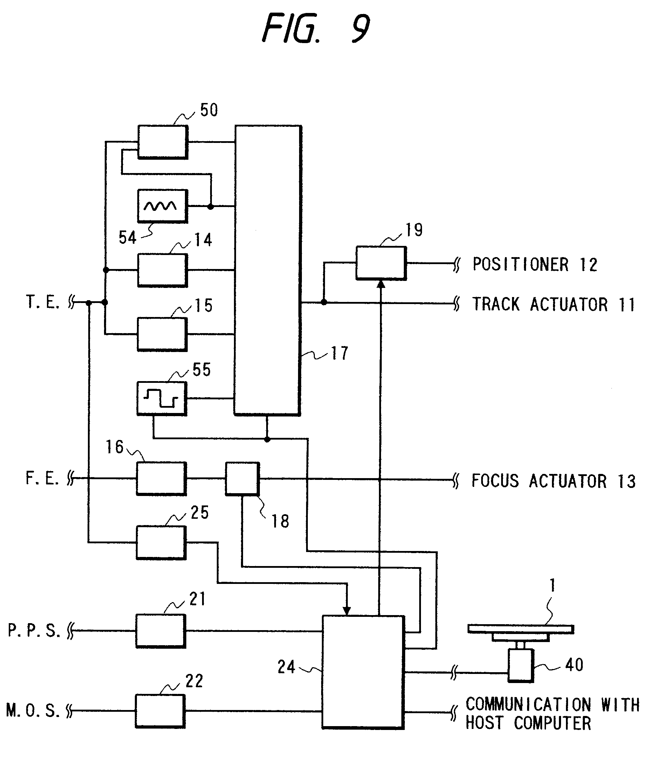

Fig. 9 is a structural drawing of the servo controller 10 and system controller 20 of Fig. 8.

The servo controller 10 comprises a land track control circuit 14, a groove track control circuit 15, a focus control circuit 16, switch circuits 17, 18, a positioner control circuit 19, a land/groove identifying circuit 50, a tracking actuator forced drive circuit 54, and a jump pulse generating circuit 55, shown in Fig. 9. Further, the system controller 20 comprises an address detecting circuit 21, an information reproducing circuit 22, and a control circuit 24, shown in Fig. 9.

The tracking error signal TE is supplied to the land track control circuit 14 and to the groove track control circuit 15. The control circuits each have same control constants but opposite polarities of output signals.

The switch circuit 17 takes in output signals from the land track control circuit 14, from the groove track control circuit 15, from the tracking actuator forced drive circuit 54, and from the jump pulse generating circuit 55. Then it selectively outputs one of the four signals thus taken in, depending upon signals from the system controller 20 and the land/groove identifying circuit 50. An output signal from the switch circuit 17 is output as a tracking signal to the tracking actuator 11.

A part of the tracking signal from the switch circuit 17 is output as a positioning signal to the positioner 12 through the positioner control circuit 19.

The focus error signal controls the focus actuator through the focus control circuit 16 and switch circuit 18. The switch circuit 18 is controlled either in an open state or in a closed state, depending upon the signal from the system controller 20. Namely, presence or absence of output from the switch circuit 18 is controlled. The signal output from the switch circuit 18 is output as a focusing signal to the focus actuator 13.

The phase pit signal (PPS) is supplied to the address detecting circuit 21. The address detecting circuit 21 detects a signal indicating the address information (an address signal) out of the phase pit signal.

The magneto-optical signal (MoS) is supplied to the information reproducing circuit 22. Then the magneto-optical signal MoS is converted into reproduction data by the information reproducing circuit 22. The address signal output from the address detecting circuit 21, and the reproduction data output from the information reproducing circuit 22 are supplied to the control circuit 24. The control circuit 24 sends the reproduction data from an area of a desired address to the host computer 30.

The jump pulse generating circuit 55 outputs a track jump pulse for moving the position of the light spot from a current track to an adjacent track.

In the present embodiment, similarly as in the first embodiment, the polarities of the output from the land track control circuit 14 and the output from the groove track detecting circuit 15 are also opposite to each other.

Next explained is the operation of the information reproducing apparatus of the present embodiment.

First, the recording medium is inserted into the information reproducing apparatus. The control circuit 24 sends a control signal to the spindle motor 40 (shown in Fig. 9), whereby the spindle motor starts rotating, which also rotates the recording medium placed on a turn table. The reproducing apparatus detects whether the recording medium thus inserted is a land/groove recording medium or not.

This detection can be performed as follows.

The information recording medium is housed in a case. A sensor hole is formed in a part of the case. The reproducing apparatus, when the recording medium is inserted thereinto, detects the sensor hole of the case. The reproducing apparatus, if detecting the sensor hole, can recognize the recording medium thus inserted as a land/groove recording medium.

Alternatively, a mark to indicate a land/groove recording medium may be attached to the recording surface of the information recording medium. For example, the recording surface of magneto-optical disk normally has an area called PEP (phase encoding portion). In this area various information concerning the medium is recorded, and the information indicating the land/groove recording medium may be recorded in this area. Further, the information indicating the land/groove recording medium may be recorded in another predetermined area of a predetermined track.

With insertion of the recording medium the reproducing apparatus has the spindle motor rotate the information recording medium at a predetermined number of revolutions. Next, the reproducing apparatus drives the focus actuator 13 of the optical head 6 to effect the pull-in control of focus to an arbitrary track on the recording medium. This pull-in control of focus is effected when the control circuit 24 in the system controller 20 outputs a control signal to turn the switch circuit 18 into the closed state. When the switch circuit 18 turns into the closed state, the switch circuit 18 outputs a focusing signal to the focus actuator 13. Then through the operation of the focus actuator 13 the light spot is focused on the track surface.

Upon carrying out such pull-in control of focus, the switch 17 is kept open. Namely, neither of the signals from the land track control circuit 14, groove track control circuit 15, tracking actuator forced drive circuit 54, and jump pulse generating circuit 55 is output to the tracking actuator 11. This state is a state in which the tracking servo loop is open (servo off).

After the focus pull-in control has been performed so as to keep the light beam in focus, the control circuit 24 controls the switch 17 to close it to the side of the tracking actuator forced drive circuit 54. This will result in outputting a signal from the tracking actuator forced drive circuit 54 to the tracking actuator 11, whereby the tracking actuator 11 performs the operation based on the signal from the tracking actuator forced drive circuit 54.

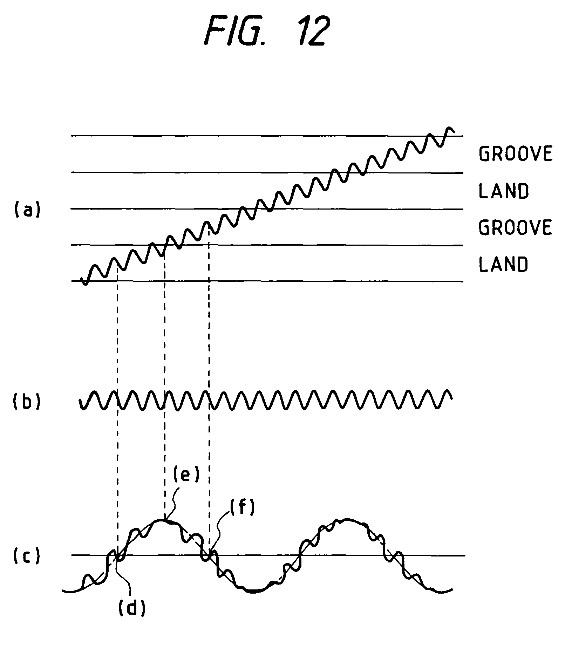

Fig. 12 is a drawing for explaining how to determine whether the track irradiated by the light beam is a land track or a groove track, from the change of polarity of the tracking error signal.
(b) in Fig. 12 is an output signal from the actuator forced drive circuit 54, which shows a drive current of the tracking actuator 11.
(a) in Fig. 12 is a drawing to show a change of the irradiation position of the light beam with a lapse of time.
   In this case, since the tracking servo is off, the absolute position of the light spot only oscillates in the radial direction, based on the output signal from the actuator forced drive circuit 54. However, since the tracks of disk 1 have eccentricity, relative positions between the light spot and the tracks of disk 1 shift in the radial direction with rotation of disk 1. Accordingly, as shown in (a) in Fig. 12, the irradiation position of the light beam is not kept on a same track, but comes to be shifted gradually to an adjacent track.
(c) in Fig. 12 shows a waveform of the track error signal when the push-pull method is used for tracking error detection. This waveform is a waveform in which vibration of the irradiation position of light beam due to the drive current shown in (b) in Fig. 12 is superimposed on a sinusoidal wave generated as the irradiation position of the light beam traverses the tracks.

Here, while in (a) in Fig. 12 the light beam is moving on a land track and while the drive current shown in (b) in Fig. 12 is decreasing, the level of the tracking error signal shown in (c) in Fig. 12 also decreases ((d) in Fig. 12). Further, while in (a) in Fig. 12 the light beam is moving on a groove track and while the drive current shown in (b) in Fig. 12 is decreasing, the level of the tracking error signal shown in (c) in Fig. 12 increases ((f) in Fig. 12). In addition, while the light beam is moving on the border between a land track and a groove track, the level of the tracking error signal shown in (c) in Fig. 12 does not change ((e) in Fig. 12).

The above proves that the polarities of the change of the drive signal of tracking actuator 11 and the change of the level of tracking error signal are opposite between when the light beam irradiates a land track and when the light beam irradiates a groove track. Thus, this relation is effective in determining whether the track irradiated by the light beam is a land track or a groove track.

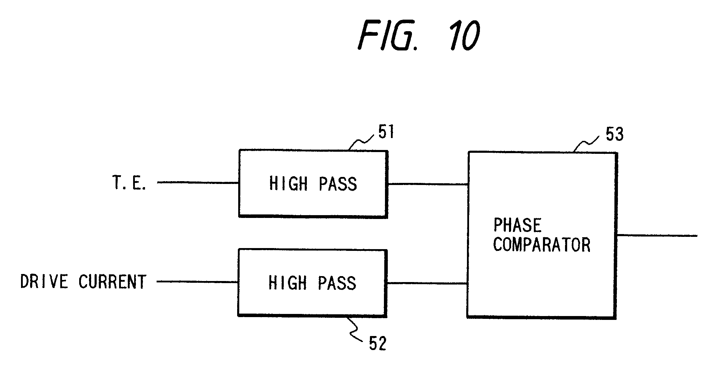

Fig. 10 is a drawing to show a structural example of the land/groove identifying circuit 50. In Fig. 10, the tracking error signal (the signal of (c) in Fig. 12) is supplied to a high-pass filter 51, and the signal from the actuator forced drive circuit 54 (the signal of (b) in Fig. 12) is supplied to a high-pass filter 52. Each high-pass filter removes low-frequency signals unnecessary for identification from the input signal and outputs the resultant. The output signals from the high-pass filters 51 and 52 are supplied to a phase comparator 53. The phase comparator 53 outputs a signal indicating a positive value when the two input signals are of a same phase or a signal indicating a negative value when the two input signals are of opposite phases. In the present embodiment, therefore, the irradiation position of light beam is on a land track when the land/groove identifying circuit 50 outputs a signal indicating a positive value; it is on a groove track when the circuit outputs a signal indicating a negative value.

In accordance with an identification signal from the land/groove identifying circuit 50, as described above, the switch circuit 17 is closed from the side of the actuator forced drive circuit 54 to the side of the land track control circuit 14 or to the side of the groove track control circuit 15. When the land/groove identifying circuit 50 outputs a signal indicating a positive value, the switch circuit is closed to the side of the land track control circuit 14; when it outputs a signal indicating a negative value, the switch circuit is closed to the side of the groove track control circuit 15.

As a result, a tracking signal depending upon the track at which the light spot is located is output to the tracking actuator 11 to start the tracking control. Then the light spot can continue following the track (a land track or a groove track) as focused thereon.

For example, supposing the identification signal from the land/groove identifying circuit 50 is one indicating a land track, the condition of tracking is set to the condition matching the land track. Then the pull-in control of tracking is carried out to the land track.

This control is carried out when the switch circuit 17 is connected to the side of the land track control circuit 14. As a result, the switch circuit 17 outputs a tracking signal of the polarity suitable for the tracking control of land track. This tracking signal is sent to the tracking actuator 11 and the tracking actuator 11 performs the pull-in control of tracking to the land track, whereby the light spot comes to continue following the land track thereafter.

The above operation keeps the light spot under the tracking control and the focus control to a certain land track. Then the light spot continues following the land track and the focus control is continuously effective on the land track surface.

In a state where the light spot is following a land track as described, the apparatus awaits an instruction from the host computer 30 installed outside the reproducing apparatus. Then the apparatus receives a reading instruction of information in a predetermined sector from the host computer 30. This instruction is supplied to the control circuit 24 in the system controller 20. The control circuit 24 determines whether the sector directed to be read by the reading instruction exists in a land track or in a groove track.

Then the control circuit 24 obtains a difference of relative position between the current head position (the current track) and the position of the sector directed to be read by the reading instruction (the target track).

The control circuit 24 turns the tracking servo loop into the open loop (servo off). This control can be made by opening the switch circuit 17 so as not to output the tracking signal from the switch circuit 17.

Next, the control circuit 24 sends a control signal to the positioner control circuit 19, thereby performing the control to move the optical head 4 toward the target track.

During movement of the optical head 4 the track error signal as shown in (a) in Fig. 7 is output. The counter circuit 25 counts the number of pulses in this track error signal. This count value is put into the control circuit 24. This count value indicates the number of tracks having been traversed by the light spot. After the light spot has traversed the tracks by the number up to the target track (when the position of the light spot has come just onto the target track), the movement of the optical head 4 is stopped to turn the tracking servo into the closed loop (servo on). The movement of the optical head 4 is stopped when the control circuit 24 sends a control signal to the positioner control circuit 19. The tracking servo is turned into the closed loop as the control circuit 24 controls the switch circuit 17. At this time, the switch circuit 17 is made to output a tracking signal of the polarity suitable for the tracking control of land track if the target track is a land track. Namely, the switch circuit 17 is connected to the output from the land track control circuit 14. If the target track is a groove track, the switch circuit is made to output a tracking signal of the polarity suitable for the tracking control of groove track. Namely, the switch circuit 17 is connected to the output from the groove track control circuit 15. Now, let us suppose that the target track is a groove track.

The reproducing apparatus reproduces information from the track followed by the light spot under the tracking control to detect a track address thereof.

The control circuit 24 checks whether the track address detected is one of groove track and whether the track is the one including the sector directed to be read by the reading instruction.

If different, it again obtains a difference of relative position between the current track address and the track including the sector directed to be read by the reading instruction (the target track). Then the above operation again is carried out.

Once coincidence has been achieved between the current track address and the address of the track including the sector directed to be read by the reading instruction, the reproducing apparatus reproduces information in the sector directed to be read by the reading instruction and transfers the information thus read out to the external host computer. This operation is carried out in such a manner that the control circuit 24 transfers the reproduced data from the information reproducing circuit 22 to the host computer 30.

After that, the reproducing apparatus again awaits an instruction from the host computer.

Next explained is the operation to move the light spot following a certain track to an adjacent track.

For example, let us suppose that the light spot is following a land track at present. In this case, the tracking signal from the land track control circuit 14 is selected and is output from the switch circuit 17. Namely, the tracking control is carried out under the control condition for land track. The switch circuit 18 is in the closed state, so that the focusing servo control is carried out for the land track.

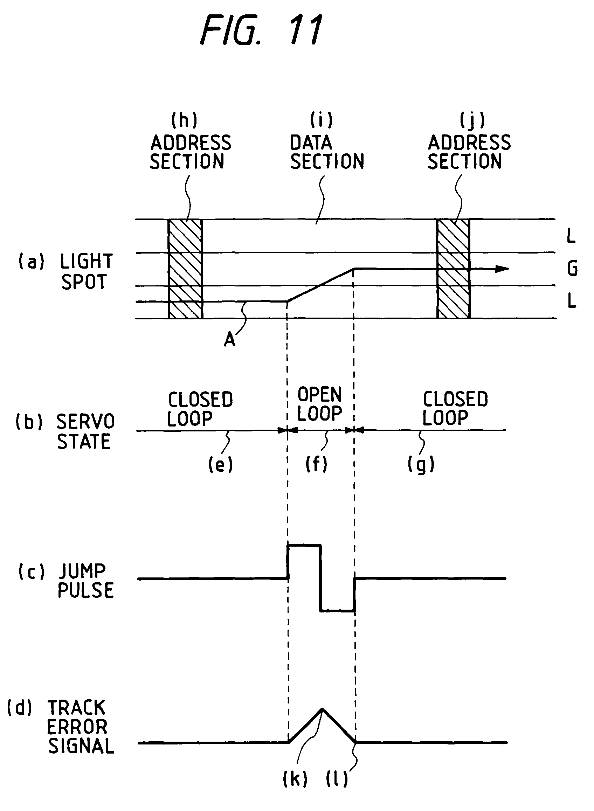

The control circuit 24 takes in an address signal from the address detecting circuit 21 to read an address of the track currently followed by the light spot. This address is read out of the address section indicated by (h) in Fig. 11. Then it is compared with the address of the destination track (the target track), and it is confirmed that the target track is a track next to the current track. If the current track is a land track, the next track is a groove track.

Next, the control circuit 24 controls the switch circuit 17 to close it to the side of the jump pulse generating circuit 55. This will result in turning the tracking control off, thereby sending a track jump pulse from the jump pulse generating circuit 55 to the tracking actuator.

Fig. 11 is a drawing for explaining the operation to move the light spot from a land track to a groove track.
(a) in Fig. 11 is a drawing to show a moving locus of the light spot on tracks.
(b) in Fig. 11 shows a state of the tracking servo corresponding to the moving locus of the light spot. In the drawing the period indicated by (e) is a period before movement to an adjacent track, in which the tracking servo is in the closed loop (the tracking control on) to keep the light spot following the land track. In the drawing the period indicated by (f) is a period in which the light spot is moving to the adjacent track, in which the tracking servo is in the open loop (the tracking control off). In the drawing the period indicated by (g) is a period after movement to the adjacent track, in which the tracking servo is in the closed loop (the tracking control on) to keep the light spot following the destination groove track.
(c) in Fig. 11 shows the waveform of the track jump pulse corresponding to the moving locus of the light spot. At start of movement of the light spot a pulse of the positive polarity is generated, the pulse is changed to a pulse of the negative polarity when the light spot reaches a certain position midway between the two tracks, and it returns to the zero level when the light spot reaches the adjacent track. The pulse of the positive polarity is an acceleration signal while the pulse of the negative polarity is a deceleration signal.
(d) in Fig. 11 shows the waveform of the track error signal corresponding to the moving locus of the light spot.

When the track jump pulse as shown in (c) in Fig. 11 is generated from the jump pulse generating circuit 55, the tracking actuator 11 starts the control to move the light spot toward the adjacent track. In accordance with the acceleration signal the moving speed gradually increases. The track jump pulse thereafter is switched into the deceleration signal. The timing for switching the track jump pulse output from the jump pulse generating circuit 55 from the acceleration signal to the deceleration signal can be determined by providing the control circuit 24 with a timer. The control circuit 24 can be arranged to output a command signal for switching into the deceleration signal a predetermined time (a time expected to elapse while the light spot moves to near the middle position between track and track) after it outputs the command signal for outputting the acceleration signal.

With switching into the deceleration signal, the light spot approaches the adjacent track as gradually decreasing the moving speed. After that, the control circuit 24 switches the output from the switch circuit 17 to the side of the groove track control circuit 15. The switching timing can be controlled by the control circuit 24. For example, the control circuit 24 may be arranged to switch the output from the switch circuit 17 a predetermined time (a time expected to elapse while the light spot moves onto the adjacent track) after it makes the jump pulse generating circuit 55 output the track jump pulse.

As a result, the track jump pulse is interrupted so as to stop being sent to the tracking actuator 11, while the tracking signal suitable for the groove track, based on the track error signal, is sent to the tracking actuator 11. Then the tracking servo turns into the closed loop (the tracking control on), thereby performing pull-in of tracking servo to the groove track. After the tracking servo is pulled in, the light spot continues following the groove track.

As described above, the light spot completes the movement from the land track to the adjacent groove track. After completion of the above movement operation of the light spot, the control circuit 24 takes in the address signal from the address detecting circuit 21 to read the address of the track currently followed by the light spot. This address is expected to be read out of the address section indicated by (j) in Fig. 11. Then the address is compared with the address of the target track to check whether the current track is the target track (the adjacent track to the track before movement).

The present embodiment was explained as to the movement of the light spot from a land track to an adjacent groove track, but movement from a groove track to a land track can also be carried out in the same manner. In the case of the movement from a groove track to a land track, the apparatus may be arranged in such a manner that the switch circuit 17 is first connected to the side of the groove track control circuit 15 and then is connected to the land track side after generation of the track jump pulse.

### (Embodiment 3)

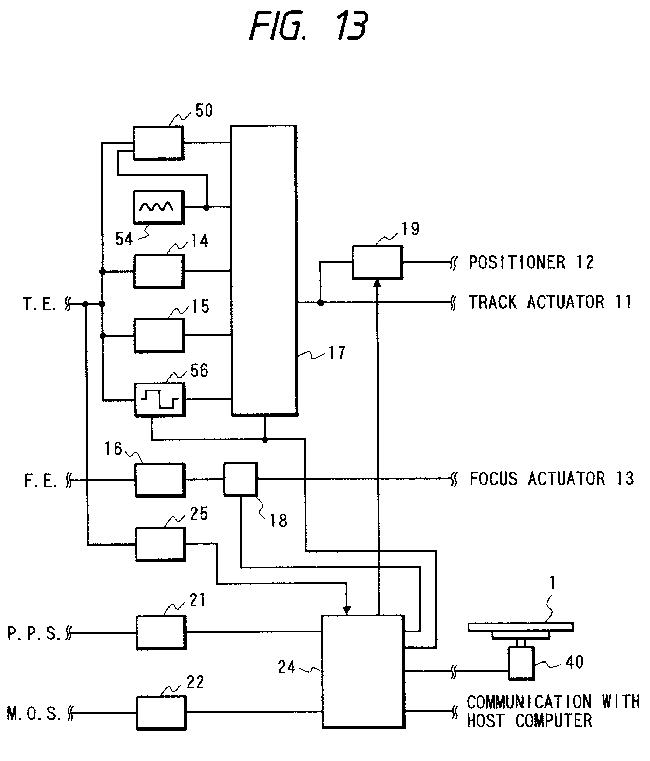

Fig. 13 is a drawing to show the structure of the servo controller and system controller in the information reproducing apparatus according to the third embodiment of the present invention. The structure as a whole is the same as the structure shown in Fig. 8.

In Fig. 13, the structure is different from the structure of Fig. 9 only in that the jump pulse generating circuit 55 is replaced by a jump pulse generating circuit 56.

The jump pulse generating circuit 56 outputs the track jump pulse as shown in (c) in Fig. 11, similarly as that shown in Fig. 9. In the structure of Fig. 9 the switching timings of track jump pulse (switching from the acceleration signal into the deceleration signal and switching into the pull-in of tracking servo) were controlled by the timer of the control circuit 24, whereas in the structure of Fig. 13 the foregoing switching timings are determined based on the tracking error signal by putting the track error signal into the jump pulse generating circuit 56.

Explained in the following is the operation in the reproducing apparatus employing the structure of Fig. 13.

The operation up to generation of track jump pulse from the jump pulse generating circuit 56 is the same as in the apparatus employing the structure of Fig. 9. The jump pulse generating circuit 56 monitors the level of the track error signal input thereto and switches the track jump pulse from the acceleration signal to the deceleration signal when the track error signal reaches the maximum level ((k) in Fig. 11, when the light spot reaches the middle point between the land track and the groove track). Then, when the level of the track error signal becomes zero ((l) in Fig. 11, when the light spot reaches the adjacent groove track), the jump pulse generating circuit 56 switches the output from the switch circuit 17 to the side of the groove track control circuit 15.

Then transmission of the track jump pulse is stopped to the tracking actuator 11 and, based on the track error signal, the tracking signal suitable for the groove track is sent to the tracking actuator 11. Then the tracking servo turns into the closed loop (the tracking control on) to effect pull-in of tracking servo to the groove track. Once the tracking servo is pulled in, the light spot thereafter continues following the groove track. The operation after that is the same as in the apparatus employing the structure of Fig. 9.

In the case where the light spot is moved from a groove track to an adjacent land track, the switch circuit 17 is initially connected to the side of the groove track control circuit 15. In this case, after the switch circuit 17 is switched to start the movement and when the level of the track error signal becomes zero, the output from the switch circuit 17 is switched to the side of the land track control circuit 14.

With the structure of Fig. 13, because switching of track jump pulse is carried out based on the track error signal, there is no need to monitor the switching timing by timer and thus no need to preliminarily set the switching time or the like, while needed in the structure of Fig. 9.

### (Embodiment 4)

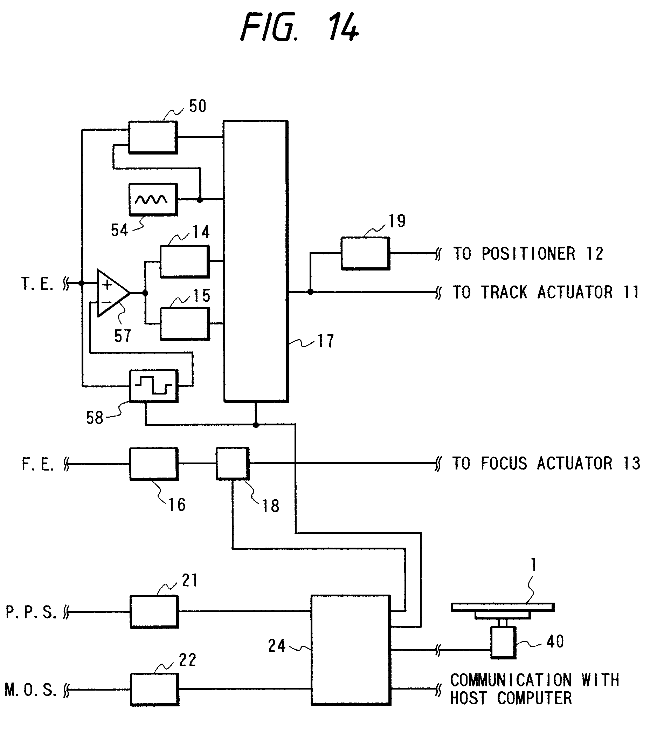

Fig. 14 is a drawing to show the structure of the servo controller and system controller in the information reproducing apparatus according to the fourth embodiment of the present invention. The structure as a whole is the same as the structure shown in Fig. 8.

The servo controller 10 comprises a land track control circuit 14, a groove track control circuit 15, a focus control circuit 16, switch circuits 17, 18, a positioner control circuit 19, a land/groove identifying circuit 50, a tracking actuator forced drive circuit 54, a differential circuit 57, and an offset circuit 58, shown in Fig. 14. Further, the system controller 20 comprises an address detecting circuit 21, an information reproducing circuit 22, and a control circuit 24, shown in Fig. 14.

The track error signal TE is supplied to the differential circuit 57, to the offset circuit 58, and to the land/groove identifying circuit 50. The offset circuit 58 generates a voltage according to an offset to be added to the track error signal. The offset from the offset circuit 58 is put into the other input terminal of the differential circuit 57.

The differential circuit 57 outputs a difference signal between the track error signal TE and the offset. This difference signal is put into the land track control circuit 14 and into the groove track control circuit 15. The control circuits each have same control constants but opposite polarities of output signals.

The offset circuit 58 produces an offset voltage in performing the operation to move the light spot to an adjacent track, as described below. When the offset circuit 58 does not output the offset voltage (when the movement control of the light spot to an adjacent track is not carried out), only the track error signal TE is supplied through the differential circuit 57 to the land track control circuit 14 and to the groove track control circuit 15.

The switch circuit 17 takes in the output signals from the land track control circuit 14, from the groove track control circuit 15, and from the tracking actuator forced drive circuit 54. Then it selectively outputs one of the three signals thus taken in, depending upon a signal from the system controller 20, the land/groove identifying circuit 50, or the offset circuit 58. The output signal from the switch circuit 17 is output as a tracking signal to the tracking actuator 11.

A part of the tracking signal from the switch circuit 17 is output as a positioning signal through the positioner control circuit 19 to the positioner 12.

The focus error signal controls the focus actuator through the focus control circuit 16 and the switch circuit 18. The switch circuit 18 is controlled either in the open state or in the closed state, depending upon a signal from the system controller 20. Namely, presence or absence of output from the switch circuit 18 is controlled. The signal output from the switch circuit 18 is output as a focusing signal to the focus actuator 13.

The phase pit signal (PPS) is put into the address detecting circuit 21. The address detecting circuit 21 detects a signal indicating the address information (address signal) out of the phase pit signal.

The magneto-optical signal (MoS) is put into the information reproducing circuit 22. Then the magneto-optical signal MoS is converted into reproduction data by the information reproducing circuit 22. The address signal output from the address detecting circuit 21 and the reproduction data output from the information reproducing circuit 22 are put into the control circuit 24. The control circuit 24 sends the reproduction data from the area of the desired address to the host computer 30.

The present embodiment is also arranged, similarly as the first embodiment was, to make the polarity of the output from the land track control circuit 14 opposite to the polarity of the output from the groove track control circuit 15.

Next explained is the operation of the information reproducing apparatus of the present embodiment.

First, the recording medium is inserted into the information reproducing apparatus. When the control circuit 24 sends a control signal to the spindle motor 40 (shown in Fig. 14), the spindle motor 40 starts rotating, thereby also rotating the recording medium placed on the turn table. The reproducing apparatus detects whether the recording medium thus inserted is a land/groove recording medium. This detection can be performed in the same manner as in the second embodiment.

With insertion of the recording medium the reproducing apparatus makes the spindle motor rotate the information recording medium at the predetermined number of revolutions. Next, the reproducing apparatus drives the focus actuator 13 of the optical head 6 to effect the pull-in control of focus to an arbitrary track on the recording medium. This pull-in control of focus is effected when the control circuit 24 in the system controller 20 outputs a control signal to turn the switch circuit 18 into the closed state. When the switch circuit 18 turns into the closed state, the switch circuit 18 outputs the focusing signal to the focus actuator 13. Then through the operation of the focus actuator 13 the light spot is focused on the track surface.

Upon carrying out such focus pull-in control, the switch 17 is kept open. Namely, either of the signals from the land track control circuit 14, groove track control circuit 15, and tracking actuator forced drive circuit 54 is kept from being output to the tracking actuator 11. This state is a state in which the tracking servo loop is open (servo off).

After the focus pull-in control has been carried out so as to keep the light beam in focus, the control circuit 24 controls the switch 17 to close it to the side of the tracking actuator forced drive circuit 54. This will result in outputting the signal from the tracking actuator forced drive circuit 54 to the tracking actuator 11 and thus letting the tracking actuator 11 operate based on the signal from the tracking actuator forced drive circuit 54.

Also in the present embodiment, the polarities of the change of the drive signal of the tracking actuator 11 and the change of the level of the tracking error signal are opposite between when the light beam irradiates a land track and when it irradiates a groove track, similarly as in the description in the second embodiment (Fig. 12). Therefore, this relation permits the apparatus to determine whether the track irradiated by the light beam is a land track or a groove track.

Accordingly, the structure of the land/groove identifying circuit 50 can also be realized by the same structure as that explained in the second embodiment (Fig. 10).

In accordance with an identification signal from the land/groove identifying circuit 50 the switch circuit 17 is closed from the side of the actuator forced drive circuit 54 to the side of the land track control circuit 14 or to the side of the groove track control circuit 15. When the land/groove identifying circuit 50 outputs a signal indicating a positive value, the switch circuit is closed to the side of the land track control circuit 14; when the identifying circuit outputs a signal indicating a negative value, the switch circuit is closed to the side of the groove track control circuit 15.

As a result, a tracking signal depending upon the track at which the light spot is located is output to the tracking actuator 11 to start the tracking control. Then the light spot can continue following the track (a land track or a groove track) as focused thereon.

For example, supposing the identification signal from the land/groove identifying circuit 50 is one indicating a land track, the condition of tracking is set to the condition matching the land track. Then the pull-in control of tracking is carried out to the land track.

This control is carried out when the switch circuit 17 is connected to the side of the land track control circuit 14. As a result, the switch circuit 17 outputs a tracking signal of the polarity suitable for the tracking control of land track. This tracking signal is sent to the tracking actuator 11 and the tracking actuator 11 performs the pull-in control of tracking to the land track, whereby the light spot comes to continue following the land track thereafter.

The above operation keeps the light spot under the tracking control and the focus control to a certain land track. Then the light spot continues following the land track and the focus control is continuously effective on the land track surface.

In a state where the light spot is following a land track as described, the apparatus awaits an instruction from the host computer 30 installed outside the reproducing apparatus. Then the apparatus receives a reading instruction of information in a predetermined sector from the host computer 30. This instruction is supplied to the control circuit 24 in the system controller 20. The control circuit 24 determines whether the sector directed to be read by the reading instruction exists in a land track or in a groove track.

Then the control circuit 24 obtains a difference of relative position between the current head position (the current track) and the position of the sector directed to be read by the reading instruction (the target track).

The control circuit 24 turns the tracking servo loop into the open loop (servo off). This control can be made by opening the switch circuit 17 so as not to output the tracking signal from the switch circuit 17.

Next, the control circuit 24 sends a control signal to the positioner control circuit 19, thereby performing the control to move the optical head 4 toward the target track.

During movement of the optical head 4 the track error signal as shown in (a) in Fig. 7 is output. The counter circuit 25 counts the number of pulses in this track error signal. This count value is put into the control circuit 24. This count value indicates the number of tracks having been traversed by the light spot. After the light spot has traversed the tracks by the number up to the target track (when the position of the light spot has come just onto the target track), the movement of the optical head 4 is stopped to turn the tracking servo into the closed loop (servo on). The movement of the optical head 4 is stopped when the control circuit 24 sends a control signal to the positioner control circuit 19. The tracking servo is turned into the closed loop when the control circuit 24 controls the switch circuit 17. At this time, the switch circuit 17 is made to output a tracking signal of the polarity suitable for the tracking control of land track if the target track is a land track. Namely, the switch circuit 17 is connected to the output from the land track control circuit 14. If the target track is a groove track, the switch circuit is made to output a tracking signal of the polarity suitable for the tracking control of groove track. Namely, the switch circuit 17 is connected to the output from the groove track control circuit 15. Now, let us suppose that the target track is a groove track.

The reproducing apparatus reproduces information from the track followed by the light spot under the tracking control to detect a track address thereof.

The control circuit 24 checks whether the track address detected is one of groove track and whether the track is the one including the sector directed to be read by the reading instruction.

If different, it again obtains a difference of relative position between the current track address and the track including the sector directed to be read by the reading instruction (the target track). Then the above operation again is carried out.

Once coincidence has been achieved between the current track address and the address of the track including the sector directed to be read by the reading instruction, the reproducing apparatus reproduces information in the sector directed to be read by the reading instruction and transfers the information thus read out to the external host computer. This operation is carried out in such a manner that the control circuit 24 transfers the reproduced data from the information reproducing circuit 22 to the host computer 30.

After that, the reproducing apparatus again awaits an instruction from the host computer.

Next explained is the operation to move the light spot following a certain track to an adjacent track.

For example, let us suppose that the light spot is following a land track at present. In this case, the tracking signal from the land track control circuit 14 is selected and is output from the switch circuit 17. Namely, the tracking control is carried out under the control condition for land track. The switch circuit 18 is in the closed state, so that the focusing servo control is carried out for the land track.

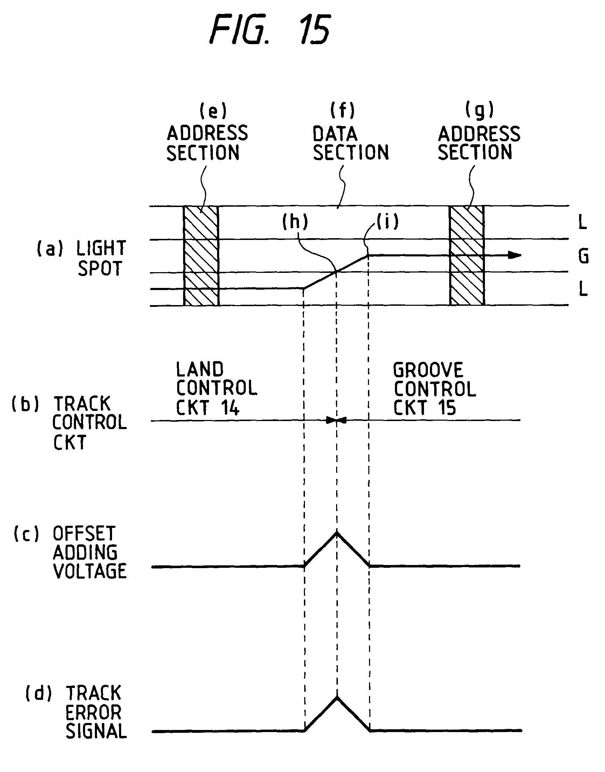

The control circuit 24 takes in an address signal from the address detecting circuit 21 to read an address of the track currently followed by the light spot. This address is read out of the address section indicated by (e) in Fig. 15. Then it is compared with the address of the destination track (the target track), and it is confirmed that the target track is a track next to the current track. If the current track is a land track, the next track is a groove track.

Next, the control circuit 24 sends a control signal for letting the offset circuit 58 output the offset signal, to the offset circuit 58. Then the offset circuit 58 outputs the offset signal of the waveform as shown in (c) in Fig. 15. This offset signal is put into the negative input terminal of the differential circuit 57. The track error signal is put into the positive input terminal of the differential circuit 57.

The differential circuit 57 outputs a difference signal between the track error signal and the offset signal. While the light spot is following the land track (while the level of the track error signal is zero) and when the offset signal as shown in (c) in Fig. 15 is output, the level of the output signal from the differential circuit 57 is deflected to the negative side. The land track control circuit 14 outputs a drive signal of the level according to the output signal from the differential circuit 57 to drive the tracking actuator 11. In this case, the tracking actuator 11 will be driven so as to move the light spot in a direction to make the level of the output signal from the differential circuit 57 zero.

The drive signal from the differential circuit 57 makes the position of the light spot shift from the center of the current track (land track). As a result, the track error signal as shown in (d) in Fig. 15 is generated. Then the level of the difference signal between the offset signal of (c) in Fig. 15 and the track error signal of (d) in Fig. 15 output from the differential circuit 57 is kept zero.

By gradually increasing the level of the offset signal, the position of the light spot gradually moves to an adjacent track. Next, the offset circuit 58 detects that the light spot comes to the middle point between the current track and the adjacent track. This detection can be realized by the level of the track error signal. As shown in Fig. 7, when the light spot moves from a land track to an adjacent groove track, the level of the track error signal becomes maximum when the light spot reaches the middle point between the two tracks. Accordingly, the apparatus can be arranged to monitor the level of the track error signal by the offset circuit 58 and detect when the level reaches a predetermined value (a value near the maximum level) ((h) in Fig. 15).

The offset circuit 58 detects that the light spot comes to the middle point between the current track and the adjacent track, as described above. Then, detecting it, the offset circuit 58 controls the switch circuit 17 to switch the output from the switch circuit 17 to the side of the groove track control circuit 15.

Then the offset circuit 58 gradually decreases the level of the offset signal output ((c) in Fig. 15). By switching the output from the switch circuit 17 to the side of the groove track control circuit 15, a track subject to the tracking control changes from a land track to a groove track. Thus, the light spot continues moving toward the adjacent groove track without returning to the land track.

Since the level of the offset signal output from the offset circuit 58 gradually decreases, the level of the track error signal also gradually decreases as shown in (d) in Fig. 15.

The offset circuit 58 monitors the level of the track error signal and turns the level of the offset signal to zero when the track error signal becomes zero ((i) in Fig. 15). The time when the track error signal becomes zero is when the light spot has moved onto the adjacent track (groove track).

When the level of the offset signal turns to zero, the differential circuit 57 comes to output a signal corresponding to only the track error signal, thereby performing the control to let the light spot follow the groove track.

As described above, the light spot completes the movement from the land track to the adjacent groove track. After completion of the above movement operation of the light spot, the control circuit 24 takes in the address signal from the address detecting circuit 21 to read the address of the track currently followed by the light spot. This address is expected to be read out of the address section shown in (g) in Fig. 15. Then the address is compared with the address of the target track to check whether the current track is the target track (the adjacent track to the track before movement).

The present embodiment was explained as to the movement of the light spot from a land track to an adjacent groove track, but movement from a groove track to a land track can also be carried out in the same manner. In the case of the movement from a groove track to a land track, the switch circuit 17 is connected to the side of the groove track control circuit 15, and the offset circuit 58 generates an offset signal of the polarity opposite to that of (c) in Fig. 15. Namely, it generates a signal starting from zero and going to the minus side with absolute values of the level increasing. In this case the track error signal also has the polarity opposite to (d) in Fig. 15. When the level of the track error signal becomes minimum, the offset circuit 58 controls the switch circuit 17 so as to switch the output from the switch circuit 17 to the side of the land track control circuit 14. Then the level of the offset signal is made to approach zero. With it, the level of the track error signal also approaches zero. Then the offset signal is also made to be zero when the track error signal becomes zero.

### (Embodiment 5)

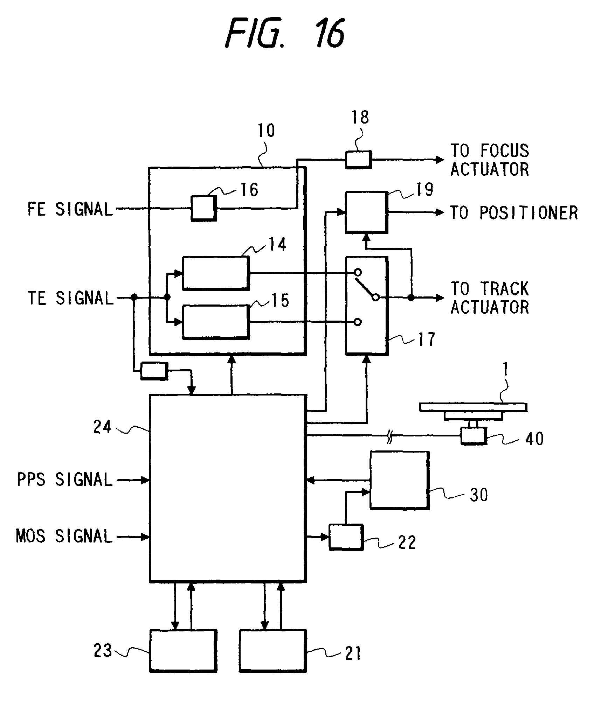

Fig. 16 is a structural drawing of the servo controller 10 and system controller 20 according to the fifth embodiment of the present invention.

The servo controller 10 comprises a land track control circuit 14, a groove track control circuit 15, a focus control circuit 16, switch circuits 17, 18, and a positioner control circuit 19, shown in Fig. 16. Further, the system controller 20 comprises an address detecting circuit 21, an information reproducing circuit 22, a land/groove determining circuit 23, and a control circuit 24, shown in Fig. 16.

The tracking error signal TE is supplied to the land track control circuit 14 and to the groove track control circuit 15. The control circuits each have same control constants but opposite polarities of output signals.

The switch circuit 17 takes in output signals from the land track control circuit 14 and from the groove track control circuit 15. Then it selectively outputs one of the two signals thus taken in, depending upon a signal from the controller 24. The output signal from the switch circuit 17 is output as a tracking signal to the tracking actuator 11.

A part of tracking signal from the switch circuit 17 is output to a positioner 12 as the positioning signal through a positioner control circuit 19.

The focus error signal FE controls the focus actuator through the focus control circuit 16 and the switch circuit 18. The switch circuit 18 is controlled either in the open state or in the closed state, depending upon a signal from the system controller 20. Namely, presence or absence of output from the switch circuit 18 is controlled. The signal output from the switch circuit 18 is output as a focusing signal to the focus actuator 13.

The phase pit signal (PPS) is supplied through the control circuit 24 to the address detecting circuit 21. The address detecting circuit 21 detects a signal indicating address information (address signal) out of the phase pit signal.

The address signal output from the address detecting circuit 21 is sent through the control circuit 24 to the land/groove determining circuit 23. Then the land/groove determining circuit 23 determines whether the position of the head 6 (i.e., the position irradiated by the light spot) is on a land track or on a groove track.

The magneto-optical signal (MoS) is supplied through the control circuit 24 to the information reproducing circuit 22. Then the magneto-optical signal MoS is converted into reproduction data by the information reproducing circuit 22. The determination signal output from the land/groove determining circuit 23, and the reproduction data output from the information reproducing circuit 22 are supplied to the control circuit 24. The control circuit 24 controls the switch 17, based on the address signal from the address detecting circuit 21. Also, the reproduction data is sent to the host computer 30.

Also in the present embodiment, the polarity of the output from the land track control circuit 14 is opposite to that of the output from the groove track detecting circuit 15, similarly as in the first embodiment.

Next explained is the operation of the information reproducing apparatus of the present embodiment.

First, the recording medium is inserted into the information reproducing apparatus. The control circuit 24 sends a control signal to the spindle motor 40 (shown in Fig. 16), so that the spindle motor 40 starts rotating, thereby also rotating the recording medium placed on the turn table. The reproducing apparatus detects whether the recording medium inserted is a land/groove recording medium. This detection can be realized in the same manner as in the second embodiment.

With insertion of the recording medium the reproducing apparatus makes the spindle motor rotate the information recording medium at the predetermined number of revolutions. Next, the reproducing apparatus drives the focus actuator 13 of the optical head 4 to effect the pull-in control of focus to an arbitrary track on the recording medium. This pull-in control of focus is effected when the control circuit 24 in the system controller 20 outputs a control signal to turn the switch circuit 18 into the closed state. When the switch circuit 18 turns into the closed state, the focusing signal from the switch circuit 18 is output to the focus actuator 13. Then, through the operation of the focus actuator 13, the light spot is focused on the track surface.

In carrying out such focus pull-in control, the switch 17 is kept open. Namely, the apparatus is arranged so that neither tracking signal from the land track control circuit 14 nor from the groove track control circuit 15 is output to the tracking actuator 11. This state is a state in which the tracking servo loop is open (servo off).

Next, the address information recorded in the track in focus is read. The address information is recorded in the address section (43 or 45) of each sector in the track of Fig. 2. At this point, it is unknown whether the track in focus is a land track or a groove track. Accordingly, the address detected by the address detecting circuit 21 is checked by the land/groove determining circuit 23 to determine whether the track on which the light spot is present currently is a land track or a groove track. In the present embodiment, the current track can be determined as a land track with an odd address or as a groove track with an even address. According to this determination signal, the control circuit 24 closes the switch circuit 17 to the side of the land track control circuit 14 when the address thus read is of a land track, or closes the switch circuit 17 to the side of the groove track control circuit 15 if it is of a groove track.

As a result, the tracking signal according to the track on which the light spot is located is output to the tracking actuator 11 to start the tracking control. Then the light spot can continue following the track (a land track or a groove track) as being focused thereon.

When the tracking servo is first turned off to read the address as described above, the absolute position of the light spot is constant because the tracking signal is not output. However, since the tracks of the disk 1 have eccentricity, the rotation of disk 1 causes the relative positions between the light spot and the tracks of disk 1 to shift in the radial direction. Therefore, the light spot will not be kept to irradiate a same track. However, the length of an address recording area in the track direction on the disk 1 is not so long. Even while the light spot is traversing a track, an address of the track can be read as long as the light spot irradiates the same track only during a period for reading the address recording area.

For example, supposing the address to be read is one of a land track, the condition of tracking is set to the condition matching the land track. Then the pull-in control of tracking is carried out for the land track. This control can be effected when the control circuit 24 in the system controller 20 outputs a control signal to select the output from the switch circuit 17. The control circuit 24 outputs a control signal for outputting the output from the land track control circuit 14 as a tracking signal through the switch circuit 17. As a result, the switch circuit 17 outputs the tracking signal of the polarity suitable for the tracking control of land track. This tracking signal is sent to the tracking actuator 11, and the tracking actuator 11 performs the pull-in control of tracking to the land track, whereby thereafter the light spot continues following the land track.

The above operation effects the tracking control and focus control on the light spot to a certain land track. Then the light spot continues following the land track and continues the focus control on the land track surface.

In a state where the light spot follows the land track in this manner, the apparatus awaits an instruction (a command) from the host computer 30 installed outside the reproducing apparatus. Then the apparatus receives a reading command of information of a predetermined sector from the host computer 30. This command is supplied to the control circuit 24 in the system controller 20. Then the control circuit 24 performs analysis of the command to read the address information included in the command. In the case of the command of information reading, this address information is an address of the sector to be read (a track address and a sector address).

The control circuit 24 determines whether the sector directed to be read by the reading instruction exists in a land track or in a groove track. As described previously, since the odd addresses are assigned to the land tracks of recording medium 1 and the even addresses to the groove tracks, whether the track in which the sector is present is a land track or a groove track can be determined by knowing whether the address of the track in which the sector to be read is present is even or odd.

Then the control circuit 24 reads the address information out of the phase pit signal (PPS) sent thereto. Reading of address information can be carried out by sending the phase pit signal received to the address detecting circuit 21. The address thus read out indicates the address of the track currently followed by the light spot (the current track). Then the address of the current track is compared with the address of the track in which the sector to be read is present (the target track), and a difference of relative position is obtained between the current track and the target track. Then the number of tracks for the light spot to move thereacross is obtained.

The control circuit 24 changes the tracking servo loop into the open loop (servo off). This control can be done by making the switch circuit 17 open so as to keep the tracking signal from the switch circuit 17 from being output.

Next, the control circuit 24 sends a control signal to the positioner control circuit 19 to perform the control to move the optical head 4 toward the target track.

The track error signal as shown in (a) in Fig. 7 is output during movement of the optical head 4. The counter circuit 25 counts the number of pulses in this track error signal. This count value is put into the control circuit 24. This count value indicates the number of tracks having been traversed by the light spot. Then, when the light spot has traversed the tracks by the number up to the target track (when the position of the light spot comes just onto the target track), the movement of the optical head 4 is stopped and the tracking servo is changed into the closed loop (servo on). The movement of the optical head 4 is stopped when the control circuit 24 sends a control signal to the positioner control circuit 19. The tracking servo is turned into the closed loop when the control circuit 24 controls the switch circuit 17. At this time, when the target track is a land track, the switch circuit 17 is let to output the tracking signal of the polarity suitable for the tracking control of land track. Namely, the switch circuit 17 is connected to the output from the land track control circuit 14. If the target track is a groove track, the switch circuit is let to output the tracking signal of the polarity suitable for the tracking control of groove track. Namely, the switch circuit 17 is connected to the output from the groove track control circuit 15. It is thus required that, prior to turning the tracking servo into the closed loop, the switch circuit 17 be connected to either one (determined depending upon the target address) of the side of the land track control circuit 14 and the side of the groove track control circuit 15. This connection can be made during a period after the tracking servo is made open upon start of movement and before the movement is stopped to close the tracking servo.

Now, let us suppose the target track is a groove track. The reproducing apparatus reproduces the information from the track followed by the light spot under the tracking control to detect the track address.

The control circuit 24 checks whether the track address detected is one of a groove track and whether the current track is the track in which the sector directed to be read by the reading instruction is present.

If different, the control circuit again obtains a difference of relative position between the current track address and the track in which the sector directed to be read by the reading instruction is present (the target track). Then it again performs the above operation.

Then, when the current track address comes to coincide with the address of the track in which the sector directed to be read by the reading instruction is present, the reproducing apparatus reproduces the information in the sector directed to be read by the reading instruction and transfers the read information to the external host computer. This operation is carried out as the control circuit 24 transfers the reproduction data from the information reproducing circuit 22 to the host computer 30.

After that, the reproducing apparatus again awaits an instruction from the host computer.

The present embodiment is arranged to assign the track addresses of the recording medium 1 in the ascending order from the inner track, but the addresses may be assigned, for example, in such a manner that addresses of 1, 2, 3, ..., N are assigned to the land tracks in order from the inside (where N is the address of the outermost land track) and that addresses of N + 1, N + 2, ..., 2N to the groove tracks in order from the inside. In this case, judgment can be made in such a manner that a track is a land track with an address being N or less while it is a groove track with an address being greater than N.

The signal supplied to the land/groove determining circuit 23 was the address information included in the PPS signal in the present embodiment, but it may be another information if it is a value indicating a certain area on the recording medium.

The embodiments as described above can increase the storage capacity by using the recessed and protruded portions of track grooves as the first and second groups of information tracks, respectively.

Further, the irradiation position of the light beam can be moved between the first group of information tracks and the second group of information tracks. Therefore, information can be arbitrarily reproduced from the tracks of the first group and from the tracks of the second group. Accordingly, applications as random access storage device are possible.

Further, the head does not need special structure and does not increase the cost. Further, the invention can be applied not only to reproduction-only media such as CDs, but also to rewritable media.

Since upon moving the irradiation position of the light beam to another track the control condition of tracking is selected by determining a track of which group the destination track is, the selection operation of the tracking control condition and the movement operation of laser light can be performed in parallel, so that the access speed of data can be increased.

## Claims

1. An information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto an information track of said first group or an information track of said second group; and
a moving mechanism for moving an irradiation position of said light beam in the radial direction of said information recording medium;
wherein said moving mechanism moves said light beam between tracks of the same first group or between tracks of the different groups.

2. An information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto a track of said first group or a track of said second group;
a tracking control circuit for making an irradiation position of said light beam follow a track of said first group or a track of said second group; and
a moving mechanism for moving the irradiation position of said light beam in the radial direction of said information recording medium;
wherein said moving mechanism moves said light beam following a track of said first group to a track of said second group and said tracking control circuit makes said light beam having been moved follow the track of said second group.

3. An information reproducing apparatus for reproducing information from an information recording medium in which a first group of information tracks and a second group of information tracks having the information recorded therein exist in concentric or spiral shape, said first group of tracks and said second group of tracks existing as stepped alternately in the radial direction, comprising:
an optical head for radiating a light beam onto an information track of said first group or an information track of said second group;
a moving mechanism for moving an irradiation position of said light beam in the radial direction of said information recording medium;
a tracking control circuit for making the irradiation position of said light beam follow a track of said first group or a track of said second group;
a setting circuit for setting a control condition in said tracking control circuit to a condition of tracking control for said first group of tracks or to a condition of tracking control for said second group of tracks; and
a control circuit for switching setting of the condition of tracking control by said setting circuit to the condition of tracking control for said second group of information tracks when the irradiation position of said light beam moves from an information track of said first group to an information track of said second group.

4. An information reproducing method for reproducing information by radiating a light beam to an information recording medium in which a first group of information tracks and a second group of information tracks having the information recorded therein exist in concentric or spiral shape, said first group of tracks and said second group of tracks existing as stepped alternately in the radial direction, comprising:
upon movement from an information track of said first group to an information track of said second group,
detecting a radial position irradiated by said light beam;
obtaining a difference of relative position between a track position of a destination track and said radial position;
moving said light beam toward the destination track;
switching a condition of tracking control to a condition suitable for the second group of information tracks; and
detecting that said light beam reaches the destination track, and starting the tracking control.

5. A reproducing apparatus for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
a signal generating circuit for generating a track error signal indicating a deviation amount between an irradiation position of said laser light and a track of said first group or a track of said second group;
a tracking control circuit for making the irradiation position of said laser light follow a track of said first group or a track of said second group, based on said track error signal;
a setting circuit for setting a control condition in said tracking control circuit to a condition of tracking control for said first group of tracks or to a condition of tracking control for said second group of tracks;
a moving mechanism for moving the irradiation position of said laser light toward a target track;
a control switching circuit for turning an operation of said tracking control circuit off upon moving the irradiation position of said laser light and turning the operation of said tracking control circuit on when the irradiation position of said laser light comes onto the target track; and
a setting switching circuit for switching said control condition to the condition of tracking control for the other group of tracks before said control switching circuit turns the operation of said tracking control circuit on.

6. The information reproducing apparatus according to Claim 5, wherein setting of the condition of tracking control in said setting circuit is setting for switching a polarity of said tracking error signal.

7. The information reproducing apparatus according to Claim 5, wherein said target track is a track adjacent to a current irradiation position of said laser light.

8. The information reproducing apparatus according to Claim 5, comprising a signal generating circuit for outputting an acceleration signal for moving the irradiation position of said laser light, wherein said moving mechanism starts movement of the irradiation position of said laser light, based on the acceleration signal.

9. The information reproducing apparatus according to Claim 8, wherein said signal generating circuit outputs a deceleration signal for decreasing a moving speed of the irradiation position of said laser light within a period after the movement of said laser light is started and before said laser light reaches said target track.

10. The information reproducing apparatus according to Claim 5, wherein in said control switching circuit a timing for turning the operation of said tracking control circuit on is determined based on said track error signal.

11. An information reproducing method for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
generating a track error signal indicating a deviation amount between an irradiation position of said laser light and a track of said first group or a track of said second group;
performing a tracking control for making the irradiation position of said laser light follow a track of said first group or a track of said second group, based on said track error signal;
turning said tracking control off;
moving the irradiation position of said laser light toward a target track;
switching a condition of said tracking control to a tracking control condition for the other group of tracks; and
turning said tracking control on when the irradiation position of said laser light comes onto said target track.

12. The information reproducing method according to Claim 11, wherein switching of the condition of said tracking control is a control for switching a polarity of said track error signal.

13. The information reproducing method according to Claim 11, wherein said target track is a track adjacent to a current irradiation position of said laser light.

14. The information reproducing method according to Claim 12, wherein a timing for turning the operation of said tracking control on is determined based on said track error signal.

15. A reproducing apparatus for reproducing information by radiating laser light to a disk-shaped information recording medium in which a first group of information tracks and a second group of information tracks having the information recorded therein exist in concentric or spiral shape, said first group of tracks and said second group of tracks existing as stepped alternately in the radial direction, comprising:
a tracking control circuit for, based on a track error signal indicating a deviation amount between an irradiation position of said laser light and a track of said first group or a track of said second group, making the irradiation position of said laser light follow the track of said first group or the track of said second group;
a setting circuit for setting a control condition in said tracking control circuit to a condition of tracking control for said first group of tracks or to a condition of tracking control for said second group of tracks;
an offset circuit for adding an offset of a level of a predetermined amount to said tracking control circuit, thereby moving the irradiation position of said light beam toward an adjacent track, and stopping addition of said offset when the irradiation position of said light beam comes onto said adjacent track; and
a setting switching circuit for switching said control condition to the tracking control condition for said adjacent track while the irradiation position of said light beam is moving toward said adjacent track.

16. The information reproducing apparatus according to Claim 15, wherein setting of the condition of tracking control in said setting circuit is setting for switching a polarity of said track error signal.

17. The information reproducing apparatus according to Claim 15, wherein said setting switching circuit switches said tracking control condition, based on said track error signal.

18. The information reproducing apparatus according to Claim 15, wherein said offset circuit stops output of said offset signal, based on said track error signal.

19. The information reproducing apparatus according to Claim 15, having:
an identifying circuit for identifying a group of a track at a current irradiation position of said light beam by detecting address data recorded in each track of said information recording medium; and
a checking circuit for checking whether a destination track is a track adjacent to the track at said current irradiation position;
wherein after completion of said checking, said offset circuit is made to output said offset signal.

20. A reproducing apparatus for reproducing information by radiating a light beam to a disk-shaped information recording medium in which a first group of information tracks and a second group of information tracks having the information recorded therein exist in concentric or spiral shape, said first group of tracks and said second group of tracks existing as stepped alternately in the radial direction and said first group of tracks and said second group of tracks each having address information for retrieval of information recorded therein, comprising:
a determining circuit for taking in address information of a destination track for an irradiation position of said light beam to move and determining whether an address thereof is an address of a track of the first group or an address of a track of the second group;
a tracking control circuit for making the irradiation position of said light beam follow a track of said first group or a track of said second group;
a setting circuit for setting a control condition in said tracking control circuit to a condition of tracking control for said first group of tracks or to a condition of tracking control for said second group of tracks;
a setting circuit for setting said control condition in accordance with a determination result by said determining circuit; and
a moving mechanism for moving the irradiation position of said light beam toward said destination track.

21. The information reproducing apparatus according to Claim 20, wherein setting of the condition of tracking control in said setting circuit is setting for switching a polarity of a track error signal used upon said tracking control.

22. The information reproducing apparatus according to Claim 21, wherein setting of said control condition by said setting circuit is carried out before end of movement of said light beam by said moving mechanism.
